(19) Europäisches Patentamt
European Patent Office
Office européen des brevets

(11) **EP 4 147 340 B1**

(12) **EUROPEAN PATENT SPECIFICATION**

(45) Date of publication and mention
of the grant of the patent:
**28.02.2024   Bulletin 2024/09**

(51) International Patent Classification (IPC):
**H02M 1/42** *(2007.01)*       **H02M 1/10** *(2006.01)*
**H02M 1/36** *(2007.01)*

(21) Application number: **21722246.2**

(52) Cooperative Patent Classification (CPC):
**H02M 1/4216; H02M 1/10; H02M 1/36;**
H02M 1/4233; Y02B 70/10

(22) Date of filing: **03.05.2021**

(86) International application number:
**PCT/EP2021/061594**

(87) International publication number:
**WO 2021/224193 (11.11.2021 Gazette 2021/45)**

(54) **ELECTRICAL POWER CONVERTER**

ELEKTRISCHER LEISTUNGSWANDLER

CONVERTISSEUR DE PUISSANCE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.05.2020   NL 2025503**

(43) Date of publication of application:
**15.03.2023   Bulletin 2023/11**

(73) Proprietor: **Prodrive Technologies Innovation
Services B.V.
5692 EM Son en Breugel (NL)**

(72) Inventors:
• **EVERTS, Jordi
5692 EM Son en Breugel (NL)**
• **MIHAYLOV, Nikolay
5692 EM Son en Breugel (NL)**

(74) Representative: **AWA Benelux
AWA Benelux SA
Tour & Taxis - Royal Depot box:216
Havenlaan 86c Avenue du Port
1000 Bruxelles (BE)**

(56) References cited:
EP-A2- 1 758 233          WO-A1-2020/035527
WO-A1-2020/079019     US-A- 5 784 269
US-A1- 2014 035 492     US-A1- 2018 083 528
US-A1- 2019 288 539

• JOHANN W. KOLAR ET AL: "The Essence of
Three-Phase PFC Rectifier Systems-Part I", IEEE
TRANSACTIONS ON POWER ELECTRONICS,
vol. 28, no. 1, 1 January 2013 (2013-01-01), pages
176-198, XP055389125, USA ISSN: 0885-8993,
DOI: 10.1109/TPEL.2012.2197867
• BALKOWIEC TOMASZ ET AL: "Predictive
Current-Limiting Thyristor Control in The
Modified Thyristor-Equipped Vienna Rectifier",
2018 7TH INTERNATIONAL CONFERENCE ON
RENEWABLE ENERGY RESEARCH AND
APPLICATIONS (ICRERA), IEEE, 14 October 2018
(2018-10-14), pages 452-457, XP033469770, DOI:
10.1109/ICRERA.2018.8566977

## Description

### Technical field

The invention relates to the field of electrical power conversion. In particular, the invention relates to an electrical converter topology allowing to convert from both three phase AC power and single phase AC power to DC power and vice versa, and to a method for controlling such an electrical converter.

### Background art

US 5784269 discloses a three-phase power factor correction (PFC) circuit comprising a rectifier and a DC/DC converter and includes a phase selection circuit. The phase selection switching circuit selects an inner phase of the three phase AC input power. A switching network is coupled to the phase selection switching circuit and controls a waveshape of at least the inner phase that is delivered to the DC/DC converter thereby to reduce harmonics associated with the three phase AC input power.

It is known that some three phase AC to DC converter topologies can basically also be used for converting single phase AC to DC. To do so, one of the three phase input terminals is used as the forward conductor whereas another one of the three phase input terminals is used as the return conductor, and the third terminal is not used, or short circuited to one of the other two phase terminals.

US 2019/0288539 discloses a three-phase PFC circuit comprising a three-phase Vienna type rectifier stage linked by first and second DC power supply bus capacitors to a DC-DC converter stage including first and second LLC resonant converters. The PFC circuit can be connected to a single phase AC grid and operated according to different single-phase connection modes to deliver 7 kW, 14 kW and 22 kW to the DC output, where 22 kW corresponds to the maximum power deliverable in three-phase operation.

The power that can be transferred between the AC side and the DC side in single phase AC to DC operation depends on the power rating of the electronic components that are connected in the current path of the phase input used for single phase operation. In the case of US 2019/0288539, this comes down to dimensioning each of the two LLC resonant DC-DC converters for a nominal power of 22 kW, instead of only 11 kW required in three-phase operation. Using a three-phase AC to DC converter for single phase operation is hence not economical because the nominal topology of three phase converters must be even enlarged to allow single phase operation at same power levels, making single phase utilization inefficient. Furthermore, implementing single phase AC to DC operation in the three phase AC to DC converter is not straightforward and requires complex changes in the control of the converter.

## Summary of the invention

It is an objective of the present invention to provide a low cost electrical converter topology that can be efficiently used both for three (multi)-phase boost-type PFC AC-DC conversion and for single phase boost type PFC AC-DC conversion. It is an objective to provide such an electrical converter topology allowing to be operated in single phase without added complexity.

According to a first aspect of the invention, there is therefore provided an electrical converter as set out in the appended claims.

An electrical converter according to the invention comprises three phase terminals, a first DC terminal and a second DC terminal, a first converter stage and a second converter stage. The first converter stage is configured for converting between the AC signal at the three phase terminals and a first (switched or DC) signal at a first intermediate node and a second intermediate node.

The first converter stage can e.g. comprise a (three-phase) bridge converter, e.g. comprising a bridge leg for each corresponding phase terminal. The first converter stage further comprises a phase selector comprising first active switches configured for selectively connecting the three phase terminals to a third intermediate node.

The second converter stage comprises a boost circuit operable to convert between a second (switched or DC) signal at a fourth and fifth intermediate nodes and a third DC signal at the first and second DC terminals through at least one second active switch. The second converter stage further comprises a (third harmonic) current injection circuit comprising third active switches operable to connect the third intermediate node selectively to the first DC terminal and to the second DC terminal. A DC-link connects the first intermediate node to the fourth intermediate node and the second intermediate node to the fifth intermediate node.

A controller is operably connected to the first, second and third active switches. The second and third active switches are advantageously operated through pulse width modulation (PWM).

According to the invention, the controller is implemented with a first mode of operation, configured to converting between the AC signal having three phase voltages and the third DC signal, and a second mode of operation configured to convert between a single phase AC signal, i.e. having only one phase voltage, and a fourth DC signal at the first and second DC terminals. The single phase AC signal can be applied between at least a first one and a second one of the three phase terminals.

One advantage of the above electrical converter is its compactness by allowing for less or smaller sized inductive and/or capacitive storage elements. By implementing the above electrical converter for use in single-phase mode, a compact and economical converter is obtained that can be used for both single-phase and three-phase operation.

Additionally, in single phase operation, the phase selector and the current injection circuit are operated along with the boost circuit to advantageously obtain a higher power rating than one third of the three-phase power rating. Advantageously, interleaved PWM operation of the boost circuit and the injection circuit avoids the need for overdimensioning inductive components, such that the higher power rating can be obtained without added cost.

The boost circuit can be arranged as a single boost circuit comprising a bridge leg connected across the first and second DC terminals. Alternatively, the boost circuit is advantageously formed of two stacked bridge legs connected across the first and second DC terminals and having a common voltage node. Using two stacked boost legs allows to utilize smaller inductive components since the boost inductors are only fed with half the DC bus voltage. It also allows to control a common mode DC voltage by controlling a voltage potential at the common voltage node.

According to a second aspect of the disclosure, there is provided a battery charging system, or a magnetic resonance imaging apparatus comprising a power supply unit, the power supply unit comprising the electrical converter of the first aspect.

According to a third aspect, a method of converting between a single phase AC signal and a DC signal utilizing a three-phase boost-type PFC converter is described herein. The method is advantageously implemented in the electrical converter as set out above.

**Brief description of the figures**

Aspects of the invention will now be described in more detail with reference to the appended drawings, wherein same reference numerals illustrate same features and wherein:

FIG. 1 schematically shows an electrical converter that is unidirectional according to an embodiment of the invention.

FIG. 2A is a diagram showing three-phase mains voltages $v_a$, $v_b$ and $v_c$ during a 360° period of the AC mains voltage.

FIG. 2B is a diagram showing voltages between the intermediate nodes of the electrical converter during a 360° period of the AC mains voltage, and illustrates the overall operating principle of the electrical converter according to an embodiment of the invention.

FIG. 2C is a diagram showing voltages across the DC link capacitors $C_x$, $C_y$, $C_z$ of the electrical converter according to an embodiment of the invention during a 360° period of the AC mains voltage.

FIG. 2D and 2C are diagrams showing currents of the electrical converter during a 360° period of the AC mains voltage, and illustrate the overall operating principle of the electrical converter according to an embodiment of the invention.

FIG. 2F is a diagram showing switching states of the phase-selector switches during a 360° period of the AC mains voltage, and illustrates the overall operating principle of the electrical converter according to an embodiment of the invention.

FIG. 2G is a diagram showing switching states of the switches of the boost (upper and lower) and buck-boost circuits during a 360° period of the AC mains voltage, and illustrates the overall operating principle of the electrical converter according to an embodiment of the invention.

FIG. 3 shows a block diagram of an advantageous implementation of a central control unit and control method according to an embodiment of the invention.

FIG. 4A, 4B, 4C show diagrams with voltages, currents and switching states within five consecutive switching cycles of the boost (upper and lower) and buck-boost bridge legs of the electrical converter, and illustrates the PWM modulation of these bridge legs according to an embodiment of the invention.

FIG. 5 schematically shows an electrical converter that is bidirectional according to an embodiment of the invention.

FIG. 6 schematically shows an electrical converter that is unidirectional, and that has an input filter that is placed before instead of after the first converter stage according to an embodiment of the invention.

FIG. 7A, FIG. 7B show different variants of the first converter stage that can be used in electrical converters of the present invention.

FIG. 8A and FIG. 8B show other variants of a first converter stage that can be used in electrical converters of the present invention.

FIG. 9 represents an electrical converter according to aspects of the present invention that is unidirectional and comprises a connection terminal for connecting to the neutral conductor of the grid (fourth phase).

FIG. 10 represents the electrical converter of Fig. 1 connected to a single phase gird.

FIG. 11 represents the single phase grid voltage and current over one period of the grid signal for the converter of Fig. 10 according to a conventional mode of operation.

FIG. 12 represents the rectified single-phase grid voltage and current at the upper and lower intermediate nodes of the first converter stage over the period of FIG 11.

FIG. 13 represents the current flows through the electrical converter of Fig. 10 in single phase mode of operation and a positive grid voltage according to a conventional mode of operation.

FIG. 14 represents the current flows through the electrical converter of Fig. 10 in single phase mode of operation and a negative grid voltage according to a conventional mode of operation.

FIG. 15 represents an alternative electrical converter according to the invention, having a two-level boost circuit.

FIG. 16 represents the single phase grid voltage and current over one period of the grid signal for the converter of Fig. 15.

FIG. 17 represents the rectified single-phase grid voltages and currents at the upper, lower and middle intermediate nodes of the first converter stage over the period of FIG. 16 in a second type of single phase operation applied to the electrical converter of FIG. 15.

FIG. 18 represents the current flows through the electrical converter of Fig. 15 in the second type of single phase mode of operation and a positive grid voltage.

FIG. 19 represents the current flows through the electrical converter of Fig. 15 in the second type of single phase mode of operation and a negative grid voltage.

FIG. 20 represents another embodiment of electrical converter according to the invention comprising a switch for partially disabling the bridge rectifier during startup.

FIG. 21 represents a diagram of a battery charging system comprising an electrical converter according to the present disclosure.

**Description of embodiments**

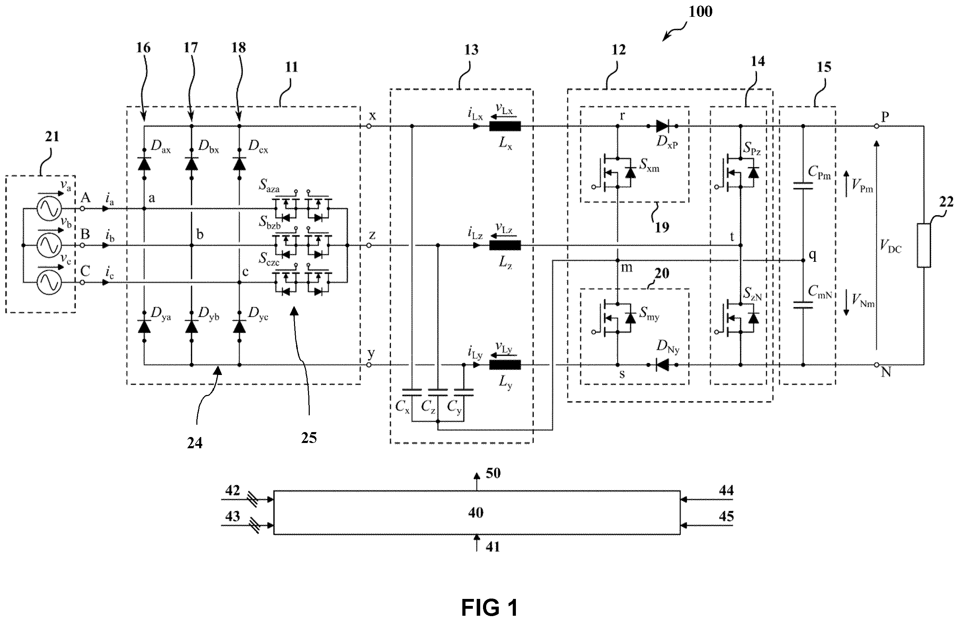

FIG. 1 shows an electrical converter 100, referred to as the DUTCH RECTIFIER, comprising two converter stages 11, 12 in the form of a three-phase active phase selector 11 and a DC/DC stage 12. Electrical converter 100 further comprises an input filter 13, and an output filter 15.

The electrical converter 100 is an AC-to-DC converter that has three phase inputs A, B, C which are connected to a three-phase voltage of a three-phase AC grid 21, and two DC outputs P, N which for example may be connected to a DC load 22 such as, for example, a high voltage (e.g. 800 V) battery of an electric car.

The first converter stage 11 comprises three phase connections a, b, c that are connected to the three phase inputs A, B, C, and three outputs x, y, z. These outputs may be seen as an upper intermediate voltage node x, a lower intermediate voltage node y, and a middle intermediate voltage node z.

The first converter stage 11 comprises a three-phase bridge rectifier 24 consisting of three bridge legs 16, 17, 18 which each comprise two passive semiconductor devices (diodes $D_{ax}$ and $D_{ya}$ for leg 16, $D_{bx}$ and $D_{yb}$ for leg 17, $D_{cx}$ and $D_{yc}$ for leg 18) connected in the form of a half bridge configuration, and a phase selector 25 comprising three selector switches ($S_{aza}$, $S_{bzb}$, and $S_{czc}$) which each comprise two anti-series connected actively switchable semiconductor devices. Each such switchable semiconductor device advantageously has an anti-parallel diode. In this example, Metal Oxide Field Effect Transistors (MOSFETs) are used for the actively switchable semiconductor devices, and each includes an internal anti-parallel body diode that may replace an external anti-parallel diode.

The DC/DC stage 12 comprises, or consists of, two stacked boost bridge legs 19, 20 and one buck-boost bridge leg 14. Each boost bridge leg (19, 20) comprises a boost switch ($S_{xm}$ for the upper boost bridge leg 19 and $S_{my}$ for the lower boost bridge leg 20) and boost diode ($D_{xP}$ for the upper boost bridge leg 19 and $D_{Ny}$ for the lower boost bridge leg 20) connected in a half-bridge configuration. The buck-boost bridge leg 14 comprises two buck-boost switches ($S_{Pz}$ and $S_{zN}$) connected in a half-bridge configuration. The middle node r of the upper boost bridge leg 19 is connected to intermediate voltage node x via an upper boost inductor $L_x$, the middle node s of the lower boost bridge leg 20 is connected to intermediate voltage node y via a lower boost inductor $L_y$, and the middle node t of the buck-boost bridge leg 14 is connected to intermediate voltage node z via a middle buck-boost inductor $L_z$.

The common node m of the upper and lower boost bridge legs 19, 20 is advantageously connected to the middle voltage node q of the output filter 15 to form two stacked 2-level boost circuits. The output filter 15 comprises two output filter capacitors $C_{Pm}$, $C_{mN}$ that are connected in series between the upper output node P and the lower output node N and middle voltage node q forming the middle node between capacitors $C_{Pm}$ and $C_{mN}$. It will be convenient to note that the middle node t of the buck-boost bridge leg 14 acts as a switch node between middle intermediate node z, and the DC output terminals P and N. Switch node t is not connected to middle voltage node q of the output filter 15.

The upper boost bridge leg 19 is connected between the upper output node P and the common node m (i.e. in parallel with the upper output filter capacitor $C_{Pm}$), and is arranged in a way that current can flow from the intermediate voltage node x to the upper output node P via the diode $D_{xP}$ when the switch $S_{xm}$ is open (not conducting, off state), and current can flow from the intermediate voltage node x to the common node m (or vice versa) via the switch $S_{xm}$ when the switch $S_{xm}$ is closed (conducting, on state). The boost switch ($S_{xm}$) of the boost bridge leg 19 is an actively switchable semiconductor device, for example a MOSFET.

The lower boost bridge leg 20 is connected between the common node m and the lower output node N (i.e. in parallel with the lower output filter capacitor $C_{mN}$), and is arranged in a way that current can flow from the lower output node N to the intermediate voltage node y via the diode $D_{Ny}$ when the switch $S_{my}$ is open (not conducting, off state), and current can flow from the common node m to the intermediate voltage node y (or vice versa) via the switch $S_{my}$ when the switch $S_{my}$ is closed (conducting, on state). The boost switch ($S_{my}$) of the boost bridge leg 20 is an actively switchable semiconductor device, for example a MOSFET.

The buck-boost bridge leg 14 is connected between the upper output node P and the lower output node N (i.e. in parallel with the DC load 22) and acts as a current injection circuit arranged such that current flows from the intermediate voltage node z to the upper output node P (or vice versa) when the switch $S_{Pz}$ is closed (conducting, on state) while the switch $S_{zN}$ is open (not conducting, off state), and current flows from the intermediate voltage node z to the lower output node N (or vice versa) when the switch $S_{zN}$ is closed (conducting, on state) while the switch $S_{Pz}$ is open (not conducting, off state). The buck-boost switches ($S_{Pz}$, $S_{zN}$) of the buck-boost bridge leg 14 are actively switchable semiconductor devices, e.g. MOSFETs, which are controlled in a complementary way (i.e. the one is closed while the other is open and vice versa).

Advantageously, three high-frequency (HF) filter capacitors $C_x$, $C_y$, $C_z$, which are part of the input filter 13, are interconnecting the intermediate voltage nodes x, y, z in the form of a star-connection. Generally, it is advantageous that the three capacitors $C_x$, $C_y$, $C_z$ have substantially equal value in order to symmetrically load the AC grid.

According to an aspect of the invention, the controller is configured to operate according to a first mode of operation, referred to as three-phase operation, and to a second mode of operation, referred to as single-phase operation as will be further described herein.

The central control unit 40 advantageously controls all the controllable semiconductor devices (switches) of the electrical converter 100, sending control signals to each switch via a communication interface 50. In particular, semiconductor devices $S_{aza}$, $S_{bzb}$, $S_{czc}$, $S_{xm}$, $S_{my}$, $S_{Pz}$, $S_{zN}$ are controlled by controller 40. Furthermore, the control unit has measurement input ports (42, 43, 44, 45), for receiving measurements of:

- 42: the AC-grid phase voltages $v_a$, $v_b$, $v_c$;
- 43: the inductor currents $i_{Lx}$, $i_{Ly}$, $i_{Lz}$;
- 44: the DC bus voltage $V_{DC}$;
- 45: the DC bus mid-point voltage $V_{mN} = -V_{Nm}$,

and an input port 41 to receive a set-value, which may be a requested DC output voltage $V_{DC}^*$. Controller operation allows particularly to accomplish the piece-wise sinusoidal shapes of inductor currents $i_{Lx}$, $i_{Ly}$, $i_{Lz}$ during normal operation.

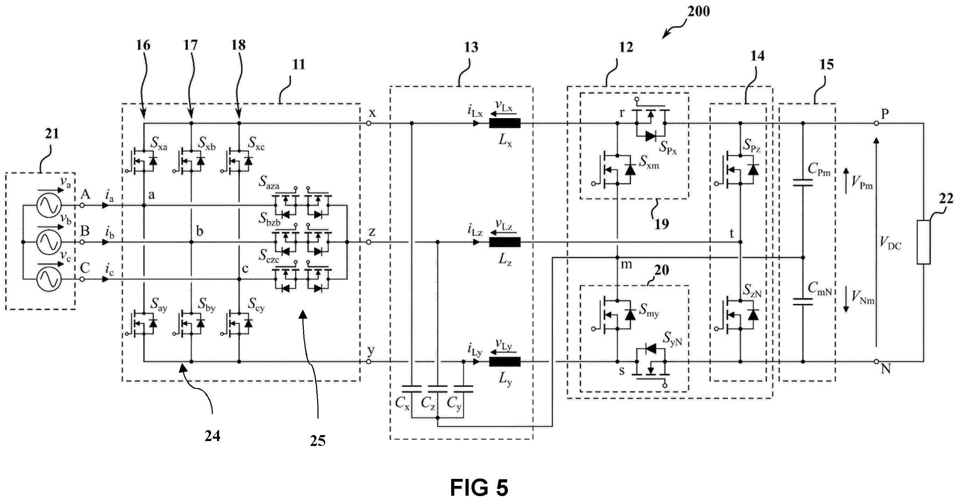

The electrical converter 100 shown in FIG. 1 is unidirectional since the input stage 11 and the output power stage 12 contain diodes, only allowing power to be drawn from the electrical AC grid 21 and provide this power at the output to a load 22. FIG. 5, on the other hand, shows an electrical converter 200 according to the invention that is bidirectional. Electrical converter 200 differs from converter 100 in that the diodes ($D_{ax}$, $D_{bx}$, $D_{cx}$, $D_{ya}$, $D_{yb}$, $D_{yc}$) of the input stage 11 and the diodes ($D_{xP}$,

$D_{Ny}$) of the output power stage 12 of the converter shown in FIG. 1 have been replaced with controllable semiconductor switches ($S_{xa}$, $S_{xb}$, $S_{xc}$, $S_{ay}$, $S_{by}$, $S_{cy}$) in the input stage 211 and ($S_{yN}$, $S_{Px}$) in the output power stage 212 respectively. The switching device 23 is provided as a semiconductor switch, e.g. MOSFET.

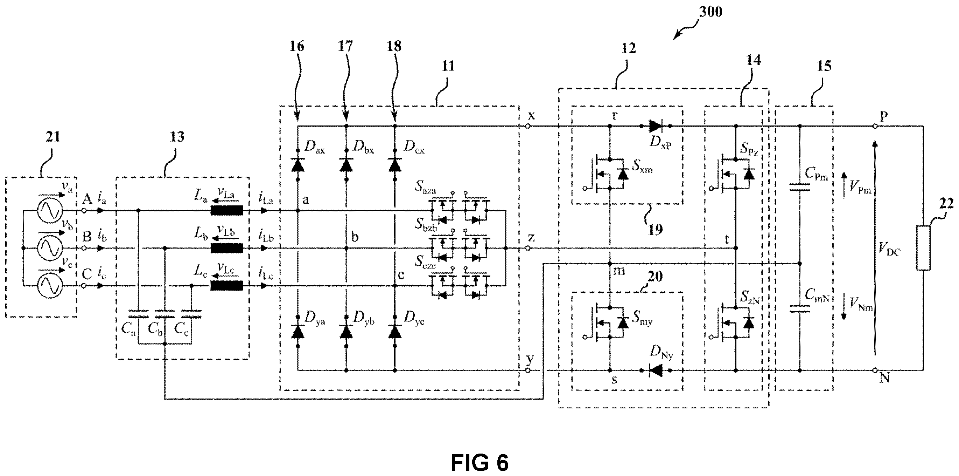

In FIG. 6, an electrical converter 300 is shown which differs from converter 100 in that the input filter 13 is placed before (instead of after) first converter stage 11, i.e. the input filter 13 is connected between the phase input terminals A, B, C and the first converter stage 11. The first converter stage 11 connects the phase input terminals A, B, C to the intermediate nodes x, y, z via the corresponding inductor $L_a$, $L_b$, $L_c$ of the input filter 13. Capacitors $C_a$, $C_b$, $C_c$ are arranged between the phase input terminals and the inductors. The capacitors are connected in a star configuration, advantageously with the star point connected to a midpoint of the output filter 15, just like in the previous examples. Alternatively, the capacitors $C_a$, $C_b$, $C_c$ can be arranged in a delta configuration across the three phase input lines. It will be convenient to note that in the example of Fig. 6, the voltage signal at the three intermediate nodes x, y, z is somewhat different as compared to the previous examples (Fig. 1, Fig. 5), since the voltages at switch nodes r, s and t are identical to the voltages at the intermediate nodes x, y, z. As a result, high frequency currents will be flowing through the first converter stage 11, whereas in the previous examples (Fig. 1 and Fig. 5) the high frequency currents only occur in the output power stage downstream of the input filter 13.

In either electrical converters 100, 200, and 300, diodes may be replaced by actively switchable semiconductor devices to allow for bidirectional power flow of the electrical converter.

In either electrical converters 10, 200 and 300, the HF capacitors $C_x$, $C_y$, $C_z$ (or $C_a$, $C_b$, $C_c$ in case of FIG. 6) are connected in a star configuration. The voltage in the star point connection can be controlled by controlling the voltage at the common node m.

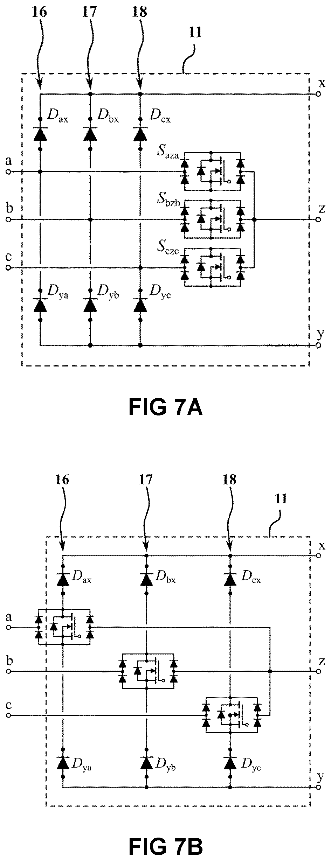

FIG. 7A, 7B show different variants of the first converter stage 11, which may be used in the electrical converters of either FIG. 1, FIG. 5, FIG. 6.

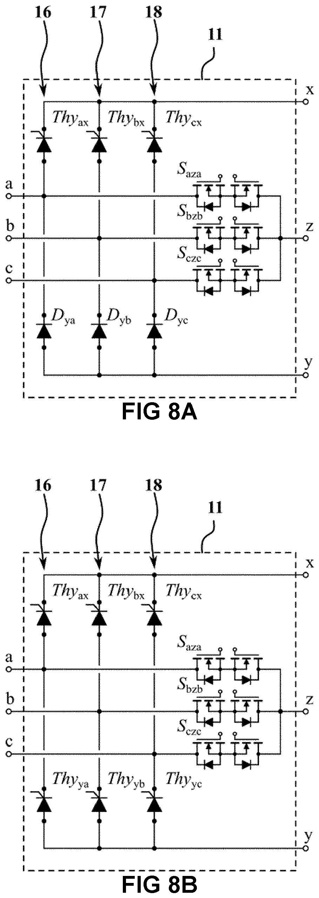

In FIGs. 8A-B yet other variants of the first converter circuit 11 are shown. In these variants, the three bridge legs 16, 17 and 18 of the phase selector are arranged as half-controlled thyristor legs (FIG. 8A), i.e. comprising thyristors $Thy_{ax}$, $Thy_{bx}$, $Thy_{cx}$ in the bridge leg portions connected to the upper intermediate node and diodes in the other bridge leg portion connected to the lower intermediate node (or vice versa), or as full-controlled thyristor legs (FIG. 8B), i.e. comprising a thyristor $Thy_{ax}$, $Thy_{bx}$, $Thy_{cx}$, $Thy_{ya}$, $Thy_{yb}$, $Thy_{yc}$, in each bridge half leg, instead of diodes. Such a phase selector allows for controllably pre-charging the output filter capacitors $C_{Pm}$, $C_{mN}$, or $C_{PN}$ without requiring an additional pre-charge circuit.

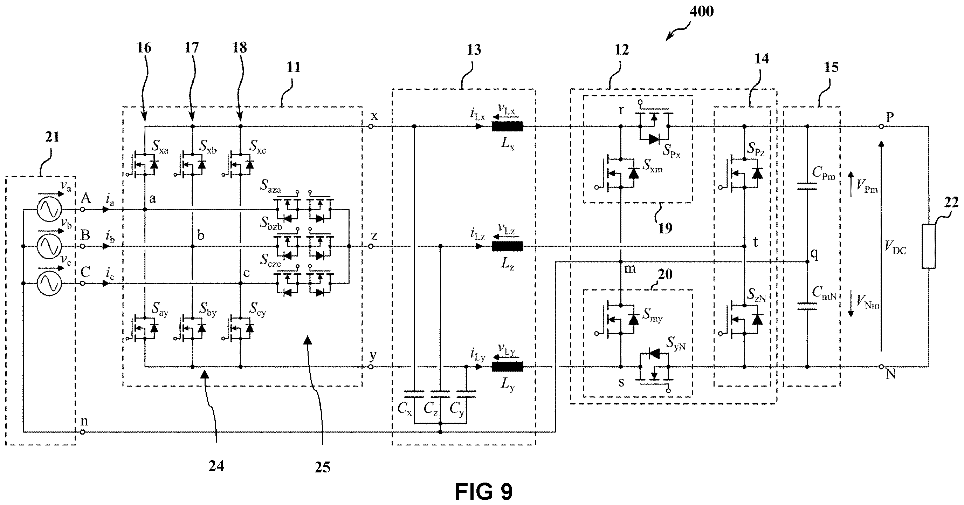

Referring to FIG. 9, the electrical converter 100 (and which may alternatively be the electrical converter 200 or 300) can comprise a connection terminal n for connecting the neutral conductor of the three-phase AC grid. In some applications, such as for example the charging of electric vehicles, it is often required that the amplitude of the sinusoidal current drawn from each phase of the three-phase grid can be independently controlled in order to be able to decrease the loading of a certain phase such that other consumer devices are still able to draw power from that particular phase during the charging of the vehicle's battery while not overloading the phase. In this case, the connection terminal n is advantageously connected to the neutral conductor of the three-phase grid, allowing a return current substantially equal to the sum of the three phase currents to flow back to the neutral conductor of the grid. In an advantageous aspect, the three phase currents can be fully independently controlled by providing a common node connected to the neutral conductor of the input.

The neutral connection terminal n is advantageously connected to the star-point of the AC capacitors $C_x$, $C_y$, $C_z$ and to the common node m of the stacked boost bridges 19, 20 (and thus also to the midpoint of the output filter 15). This results in a fully symmetrical converter structure. In this case, the voltage at the star-point and at the common node is equal to the voltage of the neutral conductor of the grid.

**Three-phase operation of the electrical converter**

Referring again to FIG. 1, the bridge leg of the bridge rectifier 24 that is connected with the phase input A, B, or C that has the highest voltage of the three-phase AC input voltage is switched in a way that the corresponding phase input A, B, or C is connected to the upper intermediate voltage node x. To achieve this, the bridge leg connects the corresponding phase connection a, b, or c with the node x via the upper diode ($D_{ax}$, $D_{bx}$, $D_{cx}$) of the bridge leg, while the corresponding selector switch ($S_{aza}$, $S_{bzb}$, $S_{czc}$) of the bridge leg is open (not conducting, off state). The bridge leg of the rectifier 24 that is connected with the phase input A, B, or C that has the lowest voltage of the three-phase AC input voltage is switched in a way that the corresponding phase input A, B, or C is connected to the lower intermediate voltage node y. To achieve this, the bridge leg connects the corresponding phase connection a, b, or c with the node y via the lower diode ($D_{ya}$, $D_{yb}$, $D_{yc}$) of the bridge leg, while the corresponding selector switch ($S_{aza}$, $S_{bzb}$, $S_{czc}$) of the bridge leg is open (not conducting, off state). The phase input A, B, or C that has a voltage between the highest voltage and the lowest voltage of the three-phase AC input voltage is connected by phase selector 25 to the middle intermediate voltage node z. To achieve this, the by phase selector 25 connects the corresponding phase connection a, b, or c with the node z via the selector switch ($S_{aza}$, $S_{bzb}$, $S_{czc}$) which is closed (conducting, on state).

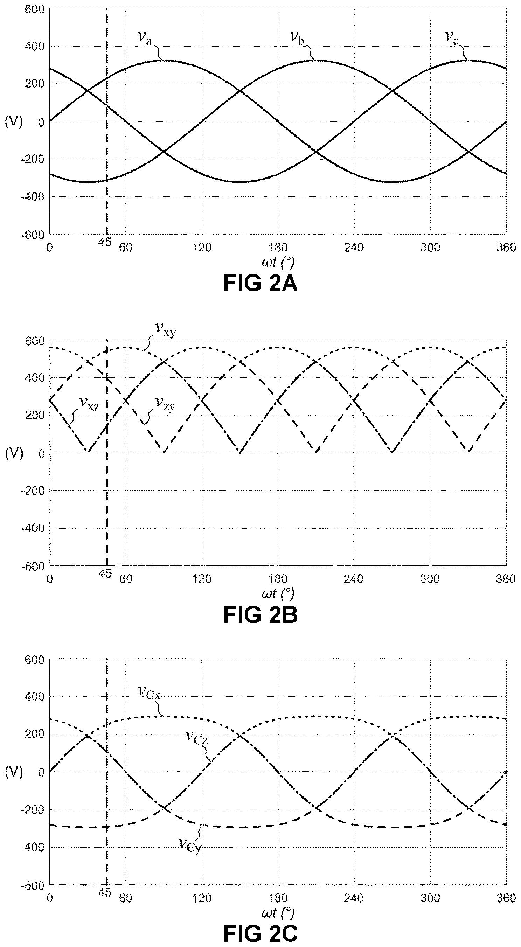

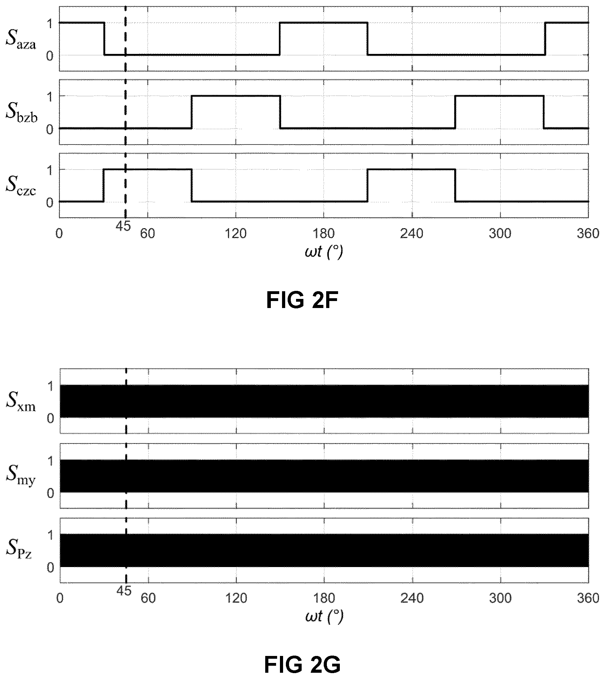

In a three-phase AC grid with substantially balanced phase voltages, for example as shown in FIG. 2A, the three-phase AC input voltage (shown in Figure 2A) is converted into three intermediate DC voltages ($v_{xz}$, $v_{zy}$, $v_{xy}$; shown in FIG. 2B) provided between the upper intermediate voltage node x, the lower intermediate voltage node y and the middle intermediate voltage node z. These DC voltages thus show piece-wise sinusoidal shapes. The conversion of the three-phase AC input voltage into three intermediate DC voltages is the result of the operation of the first converter stage 11, as explained above. The switching states (switch on → S = 1, switch off → S = 0) of the selector switches ($S_{aza}$, $S_{bzb}$, $S_{czc}$) are shown in FIG. 2F. It can be seen that the switches are 'on' or 'off' continuously during whole particular 60° sectors within the period (360°) of the AC mains voltage. Also the diodes of the bridge rectifier 24 are 'conducting' or 'not conducting' during whole particular sectors, e.g. of 60°, within the period (360°) of the AC mains voltage. The combination of states of the switches and diodes is unique for every 60° sector of the three-phase AC input voltage and depends on the voltage value of the phase inputs (A, B, C). The sequence of the 6 unique states of the switches and diodes repeats itself every period (360°) of the AC mains voltage.

Seen from the viewpoint of the intermediate voltage nodes x, y, z towards the output terminals P, N, a conventional DC-DC boost circuit (upper boost circuit) is formed, comprising the HF filter capacitor $C_x$, the upper boost inductor $L_x$, the upper boost bridge leg 19, and the upper output capacitor $C_{Pm}$. The input voltage of this upper boost circuit is the voltage $v_{Cx}$ (shown in FIG. 2C) across capacitor $C_x$ and the output voltage of this upper boost circuit is the voltage $V_{Pm}$ across the upper output capacitor $C_{Pm}$, having a voltage value that is substantially equal to half the total DC bus voltage ($V_{Pm} \approx V_{DC}/2$). The formed upper boost circuit may be operated by PWM modulation of the switch $S_{xm}$ at a specified, possibly variable, switching frequency $f_s$ in order to control the current in the upper boost inductor $L_x$.

Seen from the viewpoint of the intermediate voltage nodes x, y, z towards the output terminals P, N, a conventional 'inversed' (negative input voltage and negative output voltage) DC-DC boost circuit (lower boost circuit) is formed, comprising the HF filter capacitor $C_y$, the lower boost inductor $L_y$, the lower boost bridge leg 20, and the lower output capacitor $C_{mN}$. The input voltage of this lower boost circuit is the voltage $v_{Cy}$ (shown in FIG. 2C) across capacitor $C_y$ and the output voltage of this lower boost circuit is the voltage $V_{Nm}$ across the lower output capacitor $C_{mN}$, having a voltage value that is substantially equal to minus half the total DC bus voltage ($V_{Nm} \approx -V_{DC}/2$). The formed lower boost circuit may be operated by PWM modulation of the switch $S_{my}$ at a specified, possibly variable, switching frequency $f_s$ in order to control the current in the lower boost inductor $L_y$.

Seen from the viewpoint of the intermediate voltage nodes x, y, z towards the output terminals P, N, a conventional DC-DC buck-boost circuit (middle buck-boost circuit) is formed, comprising the HF filter capacitor $C_z$, the middle buck-boost inductor $L_z$, the buck-boost bridge leg 14, and the series connection of the output capacitors $C_{Pm}$, $C_{mN}$. This DC-DC buck-boost circuit may be seen as to be similar to a single-phase half-bridge voltage-source converter (VSC). The input voltage of this middle buck-boost circuit is the voltage $v_{Cz}$ (shown in FIG. 2C) across capacitor $C_z$ and the output voltage of this middle buck-boost circuit is the output voltage $V_{PN}$ across the series connection of the output capacitors $C_{Pm}$, $C_{mN}$. The formed middle buck-boost circuit may be operated by PWM modulation of the switches $S_{Pz}$, $S_{zN}$ at a specified, possibly variable, switching frequency $f_s$ in order to control the current in the middle buck-boost inductor $Lz$.

FIG. 2G shows the state of the switch $S_{xm}$ of the upper boost bridge leg 19, the state of the switch $S_{my}$ of the lower boost bridge leg 20, and the state of the switch $S_{Pz}$ (note that the state of the switch $S_{zN}$ is the complement of the state of the switch $S_{Pz}$) of the middle buck-boost bridge leg 14. The switches $S_{xm}$, $S_{my}$, $S_{Pz}$, $S_{zN}$ are all PWM modulated as can be seen from the black-colored bars, indicating PWM modulation of the corresponding switch.

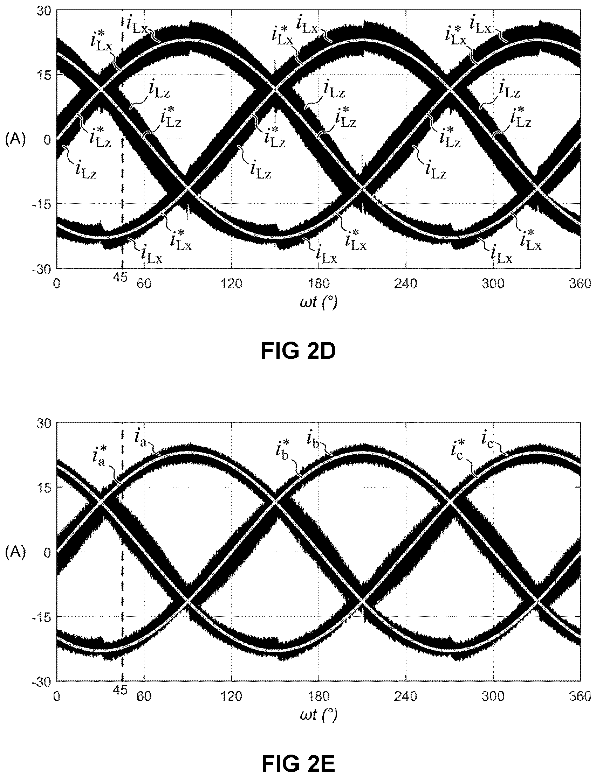

An example of the currents $i_{Lx}$, $i_{Ly}$, $i_{Lz}$ in the inductors $L_x$, $L_y$, $L_z$ is shown in FIG. 2D. As can be seen, these currents are controlled to have piece-wise sinusoidal shapes and are transformed, i.e., as a result of the operation of the first converter stage 11, into three sinusoidal AC phase currents $i_a$, $i_b$, $i_c$ which are shown in FIG. 2E.

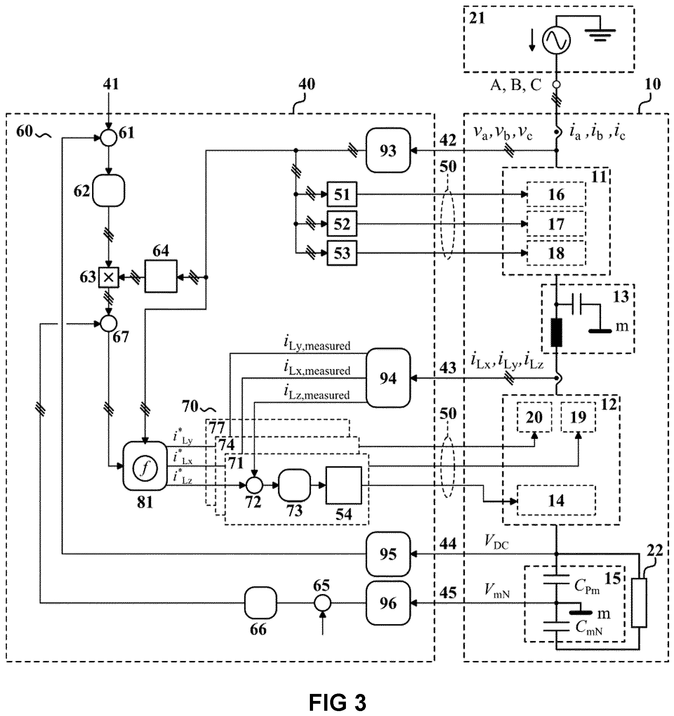

FIG. 3 shows a block diagram of an advantageous implementation of the central control unit 40 of FIG. 1 during the first mode of operation referred to as normal operation. The electrical converter 100 is represented in FIG. 3 as a 'single-wire' equivalent circuit, wherein the annotations of the elements correspond with those given in FIG. 1. Three slashes in a signal line indicate the bundling of three phase signals, and may represent the transition to a vector representation.

The goal of the control unit 40 is to control the output voltage $V_{DC}$ to a requested set-value $V_{DC}^*$ that is received from an external unit via input port 41, and to balance the voltage across the two output capacitors $C_{Pm}$ and $C_{mN}$, for example by controlling the voltage across the lower output capacitor $C_{mN}$ to be substantially equal to half the DC bus voltage. Additionally, the current drawn from the phase inputs (a,b,c) needs to be shaped substantially sinusoidal and controlled substantially in phase with the corresponding phase voltage. As explained previously, this can also be achieved by controlling the inductor currents $i_{Lx}$, $i_{Ly}$, $i_{Lz}$, i.e., instead of directly controlling the phase currents $i_a$, $i_b$, $i_c$, to have piece-wise sinusoidal shapes. In particular, the low-pass filtered values of the inductor currents are controlled while the high-frequency ripple of the inductor currents is filtered by the HF filter capacitors ($C_x$, $C_y$, $C_z$).

The control of the output voltage $V_{DC}$ is advantageously done using a cascaded control structure, comprising an outer voltage control loop 60 and inner current control loop 70. The set-value of the output voltage is input to a comparator 61 via input port 41, and is compared with the measured output voltage obtained from a measurement processing unit 95 (for example comprising a low-pass filter). The output of comparator 61 is the control-error signal of the output voltage, which is further input to a control element 62 (for example comprising a proportional-integral control block) that outputs the instantaneous set-values of the amplitudes of the phase currents. These amplitudes are input to multiplier 63, and multiplied with signals that are obtained from calculation element 64 that outputs normalized instantaneous values of the phase voltages. The input of calculation element 64 are the measured phase voltages obtained from a measurement processing unit 93 (for example comprising a low-pass filter). The output of the multiplier 63 are set-values $i_a^*, i_b^*, i_c^*$ for the instantaneous, for example low-pass filtered, phase currents $i_a$, $i_b$, $i_c$, and are shaped substantially sinusoidal and positioned substantially in phase with the corresponding phase voltages. The set-values $i_a^*, i_b^*, i_c^*$ are input to the current controller 70 after passing an addition element 67 and a selection element 81 whose functions are further detailed in the following text.

The current controller 70 is split into three individual current controllers 71, 74, 77, wherein:

- individual current controller 71 is used for controlling the current in the middle buck-boost inductor $L_z$. This control is done by PWM modulation of the switches $S_{Pz}$, $S_{zN}$ of the middle buck-boost circuit containing middle buck-boost bridge leg 14. As a result of the operation of the first converter stage 11, therewith, controller 71 controls the current of the phase input A,B,C, that has a voltage between the highest voltage and the lowest voltage of the three-phase AC voltage;

- individual current controller 74 is used for controlling the current in the upper boost inductor $L_x$. This control is done by PWM modulation of the switch $S_{xm}$ of the upper boost circuit containing upper boost bridge leg 19. As a result of the operation of the first converter stage 11, therewith, controller 74 controls the current of the phase input A,B,C, that has the highest voltage of the three-phase AC voltage;

- individual current controller 77 is used for controlling the current in the lower boost inductor $L_y$. This control is done by PWM modulation of the switch $S_{my}$ of the lower boost circuit containing lower boost bridge leg 20. As a result of the operation of the first converter stage 11, therewith, controller 77 controls the current of the phase input A,B,C, that has the lowest voltage of the three-phase AC voltage.

Selector element 81 is used to send the set-values $i_a^*, i_b^*, i_c^*$ (shown in FIG. 2D) for the instantaneous phase currents to the correct individual current controller (71, 74, 77) depending on the voltage value of the phase inputs (A, B, C), resulting in inductor current set-values $i_{Lx}^*, i_{Ly}^*, i_{Lz}^*$ (shown in FIG. 2E) for each inductor current controller, wherein:

- the set-value of the phase current of the phase input A,B,C, that has the highest voltage of the three-phase AC voltage is sent to individual current controller 74, resulting in set-value $i_{Lx}^*$ ;
- the set-value of the phase current of the phase input A,B,C, that has the lowest voltage of the three-phase AC voltage is sent to individual current controller 77, resulting in set-value $i_{Ly}^*$ ;
- the set-value of the phase current of the phase input A,B,C, that a voltage between the highest voltage and the lowest voltage of the three-phase AC voltage is sent to individual current controller 71, resulting in set-value $i_{Lz}^*$ .

In each individual current controller the received set-value $i_{Lx}^*, i_{Ly}^*, i_{Lz}^*$ ) for the instantaneous inductor current is input to a comparator, for example comparator 72 of individual current controller 71, and compared with the measured inductor current obtained from a measurement processing unit 94 (for example comprising a low-pass filter). The output of the comparator is the control-error signal of the current, which is further input to a control element, for example control element 73 of individual current controller 71, whose output is input to a PWM generation element, for example PWM generation element 54 of individual current controller 71. The PWM generation element of the individual current controllers generate the PWM-modulated control signals for the controllable semiconductor switches of the PWM-controlled bridge legs, i.e. the upper boost bridge leg 19 of the upper boost circuit, the lower boost bridge leg 20 of the lower boost circuit, and the middle buck-boost bridge leg 14 of the middle buck-boost circuit. These PWM-modulated control signals are sent to the appropriate bridge legs via communication interface 50.

The selector switches of the first converter stage 11 are either 'on' or 'off' during each 60° sector of the three-phase AC input voltage, depending on the voltage value of the phase inputs (A, B, C). The control signals for the selector switches are generated by switch-signal generators 51, 52, 53.

DC bus mid-point balancing can be done by adding an offset value to the set-values $i_a^*, i_b^*, i_c^*$ for the instantaneous, for example low-pass filtered, phase currents $i_a$, $i_b$, $i_c$, which are output by multiplier 63. The offset value is obtained by comparing the measured DC bus midpoint voltage obtained from a measurement processing unit 96 (for example comprising a low-pass filter) with a set-value (for example $V_{DC}/2$) using comparator 65 and feeding the error signal output by the comparator 65 into a control element 66.

The phase currents $i_a$, $i_b$, $i_c$ shown in FIG. 2E are obtained by controlling the electrical converter 100 using such control unit 40 and control method detailed in the foregoing text. Also shown in FIG. 2E are the set-values $i_a^*, i_b^*, i_c^*$ for the instantaneous, for example low-pass filtered, phase currents $i_a$, $i_b$, $i_c$, as input to selector element 81 shown in FIG. 3. As explained above, the phase currents $i_a$, $i_b$, $i_c$ are indirectly controlled, i.e., they are the result of the controlling of the inductor currents $i_{Lx}$, $i_{Ly}$, $i_{Lz}$ (shown in FIG. 2D) and the operation of the first converter stage 11. The setpoints for the inductor currents ( $i_{Lx}^*, i_{Ly}^*, i_{Lz}^*$ ) are derived from set-values $i_a^*, i_b^*, i_c^*$ by selector element 81 based on the measured phase voltages.

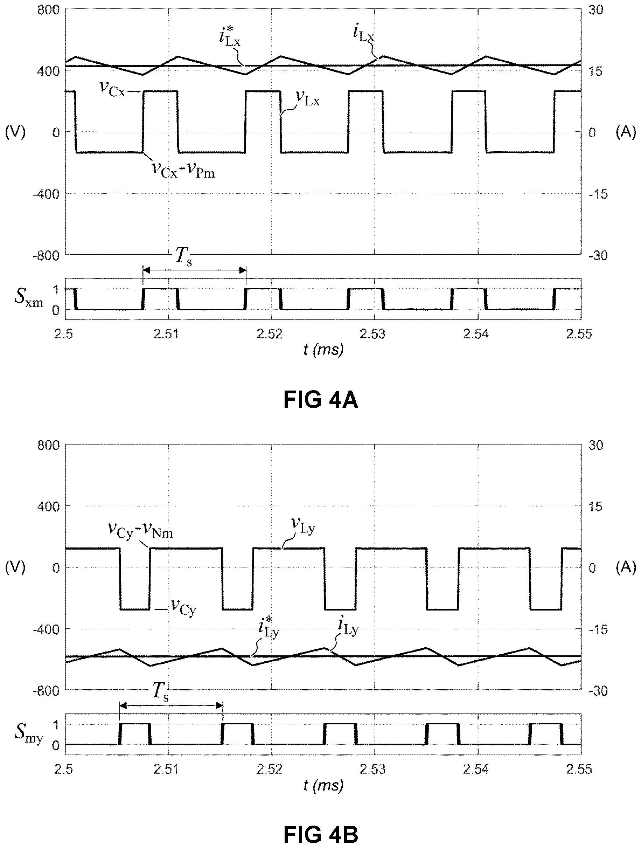

FIGS. 4A-4C show diagrams within five consecutive switching cycles (i.e., each having a switching period $T_s$ equal to $1/f_s$, with $f_s$ the switching frequency) of the bridge legs of the electrical converter 100, for a time interval around $\omega t = 45°$ which lies within the sector of the three-phase AC input voltage where $0 \leq \omega t < 60°$ (see FIG. 2). Within this sector, the selector switches and diodes of the first converter stage 11 are in the following switching states:

- Switch $S_{aza}$ = 0 (off), diode $D_{ax}$ = 1 (conducting), diode $D_{ya}$ = 0 (blocking); phase connection a is connected with node x;
- Switch $S_{bzb}$ = 0 (off), diode $D_{bx}$ = 0 (blocking), diode $D_{yb}$ = 1 (conducting); phase connection b is connected with node y;
- Switch $S_{czc}$ = 1 (on), diode $D_{cx}$ = 0 (blocking), diode $D_{yc}$ = 0 (blocking); phase connection c is connected with node z;

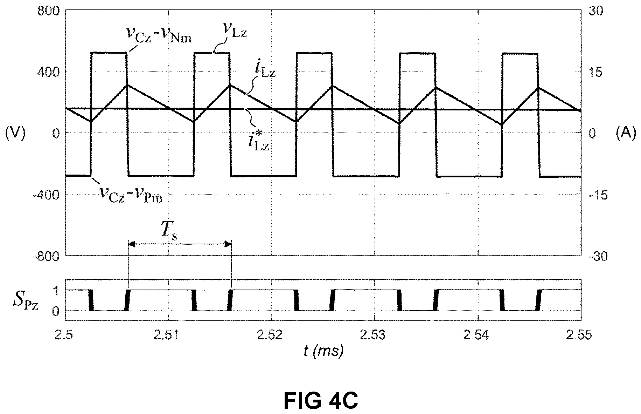

The diagrams of FIGS. 4A-4C show voltages, currents, and switching signals on a milliseconds time axis. FIG. 4A corresponds with the operation of the upper boost circuit, showing the corresponding inductor current $i_{Lx}$ (and the set-value $i_{Lx}^*$ of this current), the inductor voltage $v_{Lx}$, and the control signal $S_{xm}$ of the switch of the PWM-modulated upper boost bridge leg 19. FIG. 4B corresponds with the operation of the lower boost circuit, showing the corresponding inductor current $i_{Ly}$ (and the set-value $i_{Ly}^*$ of this current), the inductor voltage $v_{Ly}$, and the control signal $S_{my}$ of the switch of the PWM-modulated lower boost bridge leg 20. FIG. 4C corresponds with the operation of the middle buck-boost circuit, showing the corresponding inductor current $i_{Lz}$ (and the set-value $i_{Lz}^*$ of this current), the inductor voltage $v_{Lz}$, and the control signal $S_{Pz}$ of the upper switch of the PWM-modulated bridge leg 14. Note that the control signal $S_{zN}$ of the lower switch of the PWM-modulated bridge leg 14 is the complement of the control signal $S_{Pz}$.

In order to minimize the Total Harmonic Distortion (THD) of the AC input current of the electrical converter, the high-frequency ripple of phase currents $i_a$, $i_b$, $i_c$ is advantageously minimized.

An advantage of the electrical converter 100 is that the half-switching-period volt-seconds product/area of the upper boost inductor and of the lower boost inductor are smaller than the volt-seconds products/areas of the boost inductors of a conventional six-switch boost-type PFC rectifier. This is because the voltages applied to these inductors are smaller than in the case of a conventional six-switch boost-type PFC rectifier. For the middle buck-boost inductor, the applied voltages are not necessarily smaller but the value of the current flowing in the inductor is smaller than the value of the currents flowing in inductors of a conventional six-switch boost-type PFC rectifier. As a result, smaller inductors with less magnetic energy storage are feasible, resulting in a higher power-to-volume ratio of the electrical three-phase AC-to-DC converter 100 that is provided by the present invention.

Three-phase operation of the electrical converters 200-400 as represented in Figs. 5, 6 and 9 is analogous to three-phase operation of converter 100 described above.

**Single-phase operation of the electrical converter**

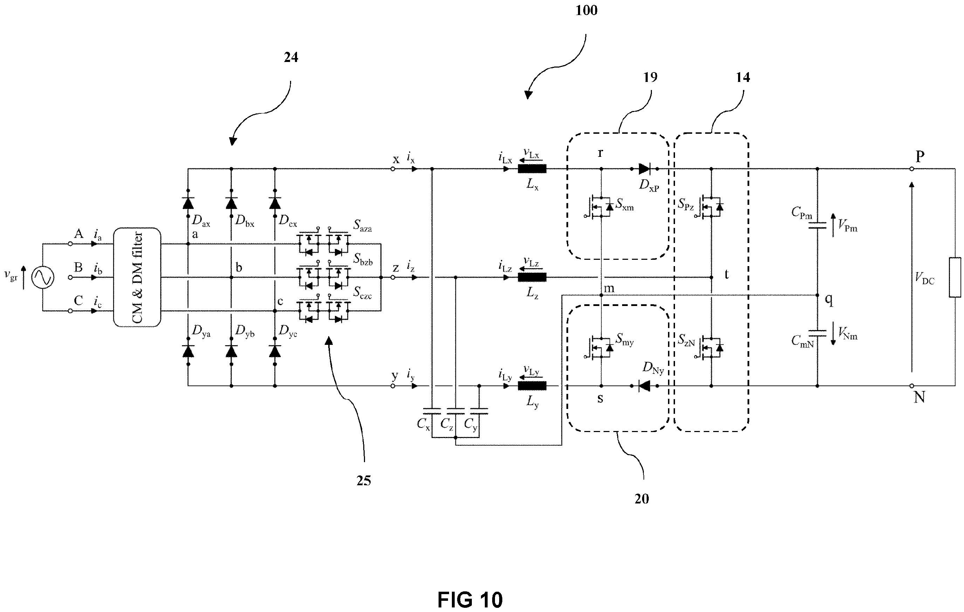

According to the invention, the controller 40 is implemented with a second mode of operation, referred to as single-phase operation, which is chosen when at the AC side, the converter is connected to a single-phase grid $v_{gr}$. Referring to Fig. 10, showing the electrical converter 100, in single-phase operation, one of the AC phase terminals, e.g. A is connected to the forward conductor of the single-phase grid $v_{gr}$ and another AC phase terminal, e.g. C is connected to the return conductor of $v_{gr}$. The third phase terminal, e.g. B, is not connected. Different single-phase operation modes can be contemplated.

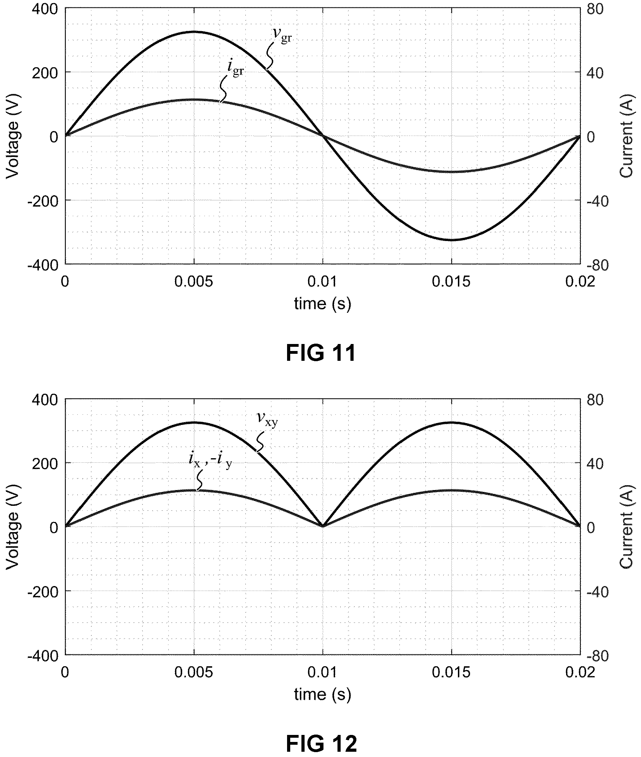

In a first, conventional single-phase operation mode, the bridge rectifier 24 rectifies/folds the grid voltage $v_{gr}$ into $v_{xy}$ between the intermediate nodes x and y, as shown in FIG. 11 and FIG. 12. The boost circuit legs 19 and 20 can be operated to generate currents $i_x$ and $i_y$, respectively, which are in phase with $v_{xy}$ as shown in

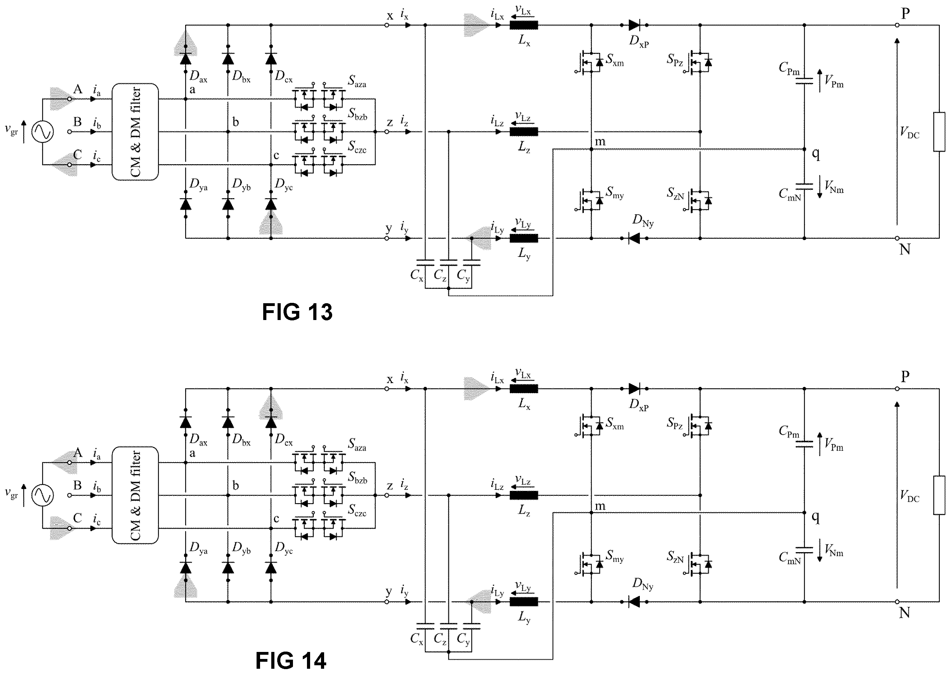

FIG. 12, with $i_x = -i_y$. In particular, active switches $S_{xm}$ and $S_{my}$ are operated with PWM and diodes $D_{xp}$ and $D_{ny}$ are conducting when the respective $S_{xm}$ and $S_{my}$ is open. The bridge 24 unfolds $i_x$ and $-i_y$ into the grid current $i_{gr}$. In this embodiment, the phase selector switches $S_{aza}$, $S_{bzb}$, $S_{czc}$ and the third harmonic current injection leg 14 with switches $S_{pz}$, $S_{zn}$ are not operational (i.e. they are open and non-conducting) and no current flows through intermediate node z ($i_z = 0$). FIG. 13 shows the current paths during the interval where the grid voltage at A is positive. FIG. 14 shows the current paths during the interval where the grid voltage at A is negative.

The above single-phase operation allows to convert at least one third of the power as compared to three-phase operation. Assuming three-phase operation allows for converting 22 kW, i.e. 3x32 Arms in the phases for 400 Vrms line-to-line voltage. In three-phase operation, the peak current at node $x = \sqrt{2} * 32 = 45.2$ Apk (i.e. equal to the positive amplitude value of the phase currents). The peak current at node $y = -\sqrt{2} * 32 = -45.22$ Apk (i.e. equal to the negative amplitude value of the phase currents). The peak current at node $z = \pm\sqrt{2} * 32/2 = \pm 22.6$ Apk (i.e. equal to the current value at the crossings of the phase currents). These respective currents are generated by the respective HF bridge legs 19-20 and 14. In single phase operation, only the upper and lower boost bridge legs 19, 20 are active and carry the same current (i.e. they do not act in parallel). This means that the peak phase current is equal to 45.2 Apk, meaning 32 Arms is obtained as well. The converted power is then 230 Vrms x 32 Vrms = 7.36 kW or about one third of 22 kW, assuming 230 Vrms phase voltage.

It is possible to obtain an even higher power rating in single-phase operation by allowing the inductors of the input filter stage (differential mode (DM) inductors) to go into controlled saturation, without the need to overdimension the inductive components as compared to three-phase operation.

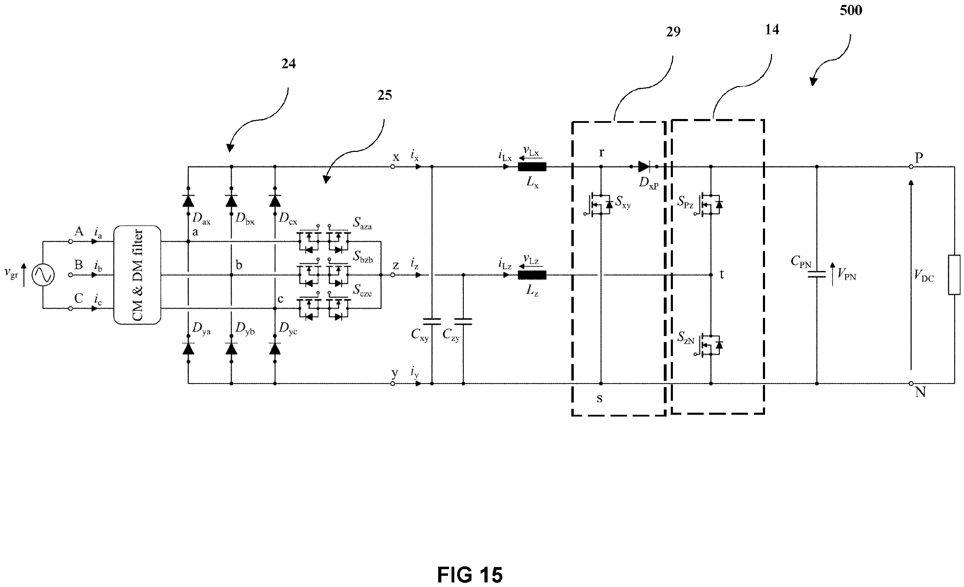

In another circuit topology, referring to FIG. 15, electrical converter 500 shows a single (two-level) boost circuit 29 connected between nodes P and N, and inductor $L_y$ is missing in the DC-link between nodes y and s. In single-phase operation, the converter 500 can be operated analogously to converter 100 as described above, i.e. the boost circuit 29 is operated through PWM while the current injection leg 14 and phase selector 25 are not operated. A same current path as shown in Figs. 13 and 14 is obtained.

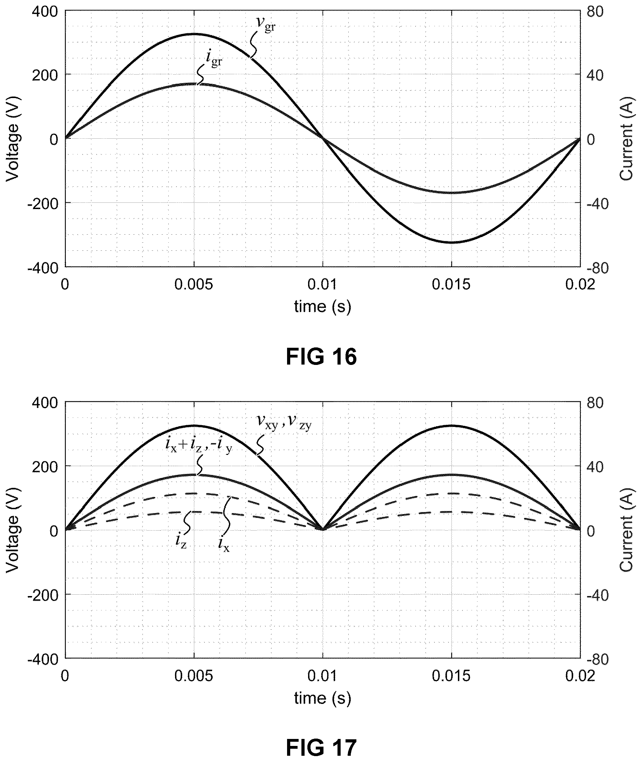

Still referring to Fig. 15, in a second single-phase operation mode, according to aspects of the present disclosure, single-phase operation can be performed by operating the injection leg 14 as well as the boost circuit 29 through PWM. The single-phase grid is still connected to two phase terminals A, C. The bridge rectifier 24 rectifies/folds the grid voltage $v_{gr}$ as shown in FIG. 16 into the rectified voltage $v_{xy}$ between nodes x and y as shown in FIG. 17. The phase selector 25 is operated (by controller 40) to connect the middle intermediate node z to phase terminal A during the positive half-cycle of $v_{gr}$ and to connect the middle intermediate node z to phase terminal C during the negative half-cycle of $v_{gr}$. By so doing, the phase selector 25 rectifies/folds the grid voltage $v_{gr}$ as shown in FIG. 16 into the rectified voltage $v_{zy}$ between nodes z and y as shown in FIG. 17, and obtains at middle intermediate node z a parallel current path $i_z$ to the current path $i_x$ at upper intermediate node x, i.e. the single phase conductor that is connected to node x by bridge 24 is also connected to node z by phase selector 25. It will be convenient to note that the respective switches of the phase selector are operated at a low frequency, e.g. grid frequency.

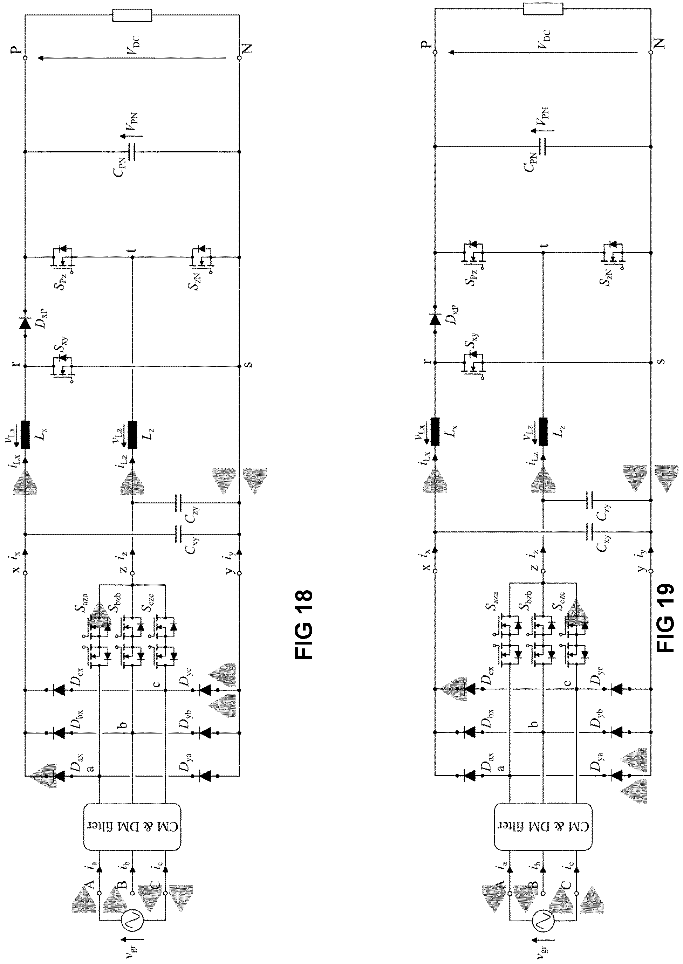

The switches $S_{xy}$ and $S_{Pz}$, $S_{zN}$ of the boost leg 29 and injection leg 14 are operated through PWM in order to generate DC-link currents $i_x$ and $i_z$, respectively, which are in phase with $v_{xy}$ and $v_{zy}$ as shown in FIG 17. DC-link currents $i_x$ and $i_z$ are combined into $i_y$ according to Kirchhoff's law: $i_z + i_x = -i_y$. The bridge rectifier 24 unfolds $i_z + i_x$ and $-i_y$ as shown in FIG. 17 into $i_{gr}$ as shown in FIG.16. FIG. 18 shows the current paths during the interval where the grid voltage at A is positive. FIG. 19 shows the current paths during the interval where the grid voltage at A is negative.

In this case it will be clear that $i_{gr}$ can be higher than in the example of Figs. 11-14, and this type of single phase operation allows for converting at least half of the power as compared to three-phase operation. Assuming three-phase operation allows for converting 22 kW, i.e. 3x32 Arms in the phases for 400 Vrms line-to-line voltage. In three-phase operation, the peak current at node

$$x = \sqrt{2} * 32 = 45.2 \text{ Apk}$$

(i.e. equal to the positive amplitude value of the phase currents). The peak current at node $y = -\sqrt{2} * 32 = -45.22$ Apk (i.e. equal to the negative amplitude value of the phase currents). The peak current at node $z = \pm\sqrt{2} * 32/2 = \pm 22.6$ Apk (i.e. equal to the current value at the crossings of the phase currents). These respective currents are generated by the respective HF current legs (i.e., switches $S_{xy}$ and $S_{Pz}$, $S_{zN}$) of the boost circuit 29 and buck-boost circuit 14. In the second single-phase operation mode, these two HF current legs are active and act in parallel. Particularly, the HF current legs can be operated in phase (non-interleaved mode). This means that the peak phase current is equal to 45.2 Apk + 22.6 = 67.8 Apk meaning 48 Arms as well. The power is then 230 Vrms x 48 = 11 kW ~= 1/2 x 22 kW, assuming 230 Vrms phase voltage.

However, assuming the mains-side (input) filter is designed for 32 Arms for three-phase operation, it now must carry 48 Arms in single phase operation (carried through node y), potentially driving the DM inductors into saturation, which is allowed by appropriate selection of core materials. The resulting reduction of the attenuation of the filter can be counteracted or largely reduced by interleaving the generation of currents $i_x$ and $i_z$. In the latter case, the HF current legs of circuits 29 and 14 are operated out of phase (interleaved mode).

One advantage of operating the HF current legs, both in interleaved mode and in non-interleaved mode as described hereinabove is that it allows to control distribution of the grid current $i_a$ between DC link currents $i_x$ and $i_z$. By so doing, the current ripple of $i_a$ can be reduced.

It will be convenient to note that the second single-phase operation mode can be equally applied to the electrical converter 100 (Fig. 10), with minimal or even no overdimensioning of the inductor $L_y$ needed in case of interleaving the generation of currents $i_x$ and $i_z$. The two switches $S_{xm}$ and $S_{my}$ of the boost circuits 19, 20 between nodes r and s can be operated synchronously, i.e. simultaneously open or closed. Alternatively, it is possible to generate a multi-level voltage when operating the two switches $S_{xm}$ and $S_{my}$ in an interleaved fashion. This can be performed in particular regions of the grid voltage period, reducing the HF current ripple.

In the second single phase operation mode, the phase selector 25 can alternatively be operated such that $i_z$ and $i_y$ act in parallel, instead of $i_x$ and $i_z$. In this case, the phase selector 25 is operated (by controller 40) to connect the middle intermediate node z to phase terminal C (instead of A) during the positive half-cycle of $v_{gr}$ and to connect the middle intermediate node z to phase terminal A (instead of C) during the negative half-cycle of $v_{gr}$. It may also be possible to alternate between the two options.

The third phase terminal B, which is left disconnected in the previous examples, can alternatively be connected to either the forward conductor (i.e. shorted with A), or the return conductor (i.e., shorted with C). It is possible to connect the third phase terminal B in parallel with the current path through phase terminal A or through phase terminal C by operating the corresponding switch of phase selector 25. Referring e.g. to Figs. 18 and 19, one would then operate switch $S_{bzb}$ of phase selector 25 instead of $S_{aza}$ or $S_{czc}$ in conjunction with $S_{Pz}$ or $S_{zN}$ depending on whether phase terminal B acts in parallel with phase terminal A or C.

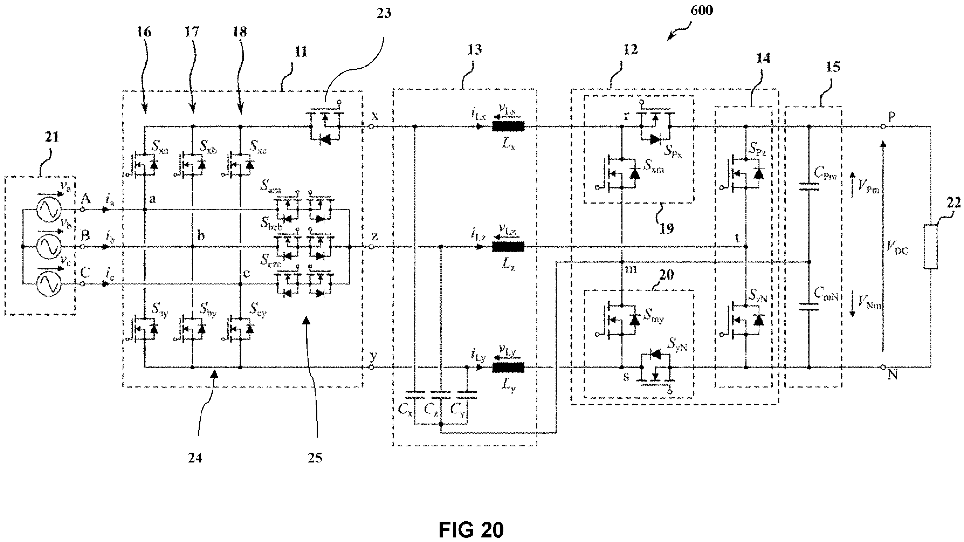

Referring to Fig. 20, an electrical converter 600 is shown which differs from electrical converter 200 of Fig. 5 in the presence of a switch 23. Switch 23 advantageously allows for pre-charging the converter at start-up. In three-phase mode of operation, at start-up, switching device 23 is opened to interrupt conduction between the upper nodes of the bridge rectifier 24 and the upper intermediate node x. No current flows through inductor $L_x$. The phase selector 25 is now operated to apply at the middle intermediate node z a phase input voltage which is slightly higher than the (instantaneous) output voltage $V_{DC}$ across the output terminals P, N for a limited amount of time (e.g. 1μs). By so doing, during the limited amount of time, the positive voltage difference between the voltage at the middle intermediate node z and the output voltage $V_{DC}$ is applied across the inductor $L_z$ causing a phase current to flow through inductor $L_z$ and further to the upper output terminal P due to the conduction of the (internal) anti-parallel diode connected to switch $S_{Pz}$ between switch node t and terminal P . The current path hence goes from middle intermediate node z through switch node t through the anti-parallel diode of switch $S_{Pz}$ and through the capacitors $C_{Pm}$, $C_{mN}$ of the output filter 15 and back to lower intermediate node y and back to a phase of the grid through one of the lower corresponding diodes/switches of the bridge rectifier 24. By so doing, the output voltage $V_{DC}$ can be stepped up gradually.

A same pre-charge operation can advantageously be performed when in single-phase mode of operation, i.e. opening switch 23 and operating the phase selector 25 as described above. In this case either switch $S_{aza}$ or $S_{czc}$, or both $S_{aza}$ and $S_{czc}$ of phase selector 25 are operated.

During normal operation, switch 23 is closed continuously, both in three-phase and single-phase mode of operation. Switch 23 can be provided as a relay switch instead of a semiconductor switch and is advantageously operably coupled to controller 40.

In one particular aspect according to the present disclosure, there is therefore provided an electrical converter (600) for converting between an AC signal having three phase voltages and a DC signal, comprising:

- three phase terminals (A, B, C), a first DC terminal (P) and a second DC terminal (N),
- a first converter stage (11) operably coupled to the three phase terminals and comprising a first intermediate node (x) and a second intermediate node (y), wherein the first converter stage is configured for converting between the AC signal at the three phase terminals and a first DC signal at the first intermediate node (x) and the second intermediate node (y), wherein the first converter stage further comprises a phase selector (25) comprising first active switches ($S_{aza}$, $S_{bzb}$, $S_{czc}$) configured for selectively connecting the three phase terminals to a third intermediate node (z),
- a second converter stage (12) operably coupled to the first and second DC terminals (P, N) and comprising a fourth intermediate node (r) and a fifth intermediate node (s), wherein the second converter stage comprises a boost circuit (19, 20, 29) operable to convert between a second DC signal at the fourth and fifth intermediate nodes (r, s) and a third DC signal at the first and second DC terminals (P, N) through at least one second active switch ($S_{xm}$, $S_{my}$), wherein the second converter stage further comprises a current injection circuit (14) comprising third active switches ($S_{Pz}$, $S_{zN}$) operable to connect the third intermediate node (z) to the first DC terminal (P) and to the second DC terminal (N),
- a link connecting the first intermediate node (x) to the fourth intermediate node (r) and the second intermediate node (y) to the fifth intermediate node (s),
- a controller (40) implemented with a first mode of operation configured to converting between the AC signal and the third DC signal,

wherein the controller (40) is implemented with a second mode of operation configured to convert between a single phase AC signal applied between at least two of the three phase terminals and a fourth DC signal at the first and second DC terminals (P, N), and wherein the converter comprises a fourth switch (23) between the first intermediate node (x) and the fourth intermediate node (r) and/or between the second intermediate node (y) and the fifth intermediate node (s), wherein the controller (40) is operable to open the fourth switch (23) during startup for pre-charging a voltage between the first and second DC-terminals. The present aspect can be provided in combination with any one of the other aspects described in the present disclosure, e.g. as recited in the appended claims.

Electrical converters according to the present disclosure can, for example, be used for converting a three-phase AC voltage or a single phase AC voltage from an electrical grid, which may be a low voltage (e.g. 380 - 400 or 240 Vrms at 50 Hz frequency) grid, into a high DC output voltage (e.g. 700-1000 V for three-phase AC and typically 350-500 V for single phase AC).

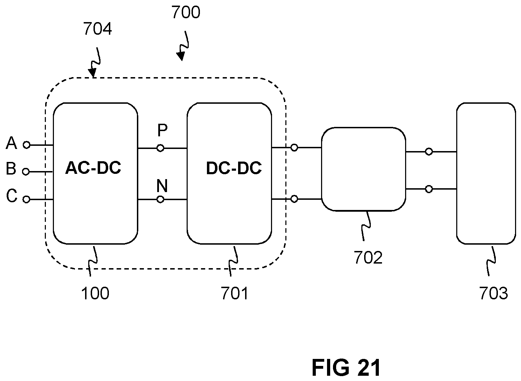

Referring to FIG. 21, a battery charging system 700 comprises a power supply unit 704. The power supply unit 704 is coupled to an interface 702, e.g. comprising a switch device, which allows to connect the power supply unit 704 to a battery 703. The power supply unit 704 comprises any one of the electrical converters as described hereinabove, e.g. converter 500, coupled to a DC-DC converter stage 701. The DC-DC converter stage 701 can comprise or consist of one or more isolated DC-DC converters. The DC-DC converter stage can comprise a transformer effecting galvanic isolation, particularly in case of wired power transfer between power supply unit 704 and the battery 703. The DC-DC converter stage can comprise a pair of coils which are inductively coupled through air, such as in case of wireless power transfer. In some cases, the interface 702 can comprise a plug and socket, e.g. in wired power transfer. Alternatively, the plug and socket can be provided at the input (e.g., at terminals A, B, C). Particularly, the DC-DC converter stage 701 can comprise a plurality of DC-DC converters which are selectively connectable in parallel and in series. When operating the electrical converter in three-phase AC mode, the DC-DC converters are typically connecter in series. When operating in single phase AC mode as described above, the DC-DC converters are typically connected in parallel. Switching between parallel and series mode of connection of the DC-DC converters can be effected using relays, as known in the art.

## Claims

1. Electrical converter (100, 200, 300, 400, 500, 600) for converting between an AC signal having three phase voltages and a DC signal, comprising:

   three phase terminals (A, B, C), a first DC terminal (P) and a second DC terminal (N), a first converter stage (11) operably coupled to the three phase terminals and comprising a first intermediate node (x) and a second intermediate node (y), wherein the first converter stage is configured to convert between the AC signal at the three phase terminals and a first DC signal at the first intermediate node (x) and the second intermediate node (y), wherein the first converter stage further comprises a phase selector (25) comprising first active switches ($S_{aza}$, $S_{bzb}$, $S_{czc}$) configured for selectively connecting the three phase terminals to a third intermediate node (z), a second converter stage (12) operably coupled to the first and second DC terminals (P, N) and comprising a fourth intermediate node (r) and a fifth intermediate node (s), wherein the second converter stage comprises a boost circuit (19, 20, 29) operable to convert between a second DC signal at the fourth and fifth intermediate nodes (r, s) and a third DC signal at the first and second DC terminals (P, N) through at least one second active switch ($S_{xm}$, $S_{my}$, $S_{xy}$), wherein the second converter stage further comprises a current injection circuit (14) comprising third active switches ($S_{Pz}$, $S_{zN}$) operable to connect the third intermediate node (z) to the first DC terminal (P) and to the second DC terminal (N), a link connecting the first intermediate node (x) to the fourth intermediate node (r) and the second intermediate node (y) to the fifth intermediate node (s), and a controller (40) implemented with a first mode of operation configured to convert between the AC signal and the third DC signal, **characterised in that** the controller (40) is implemented with a second mode of operation configured to convert between a single phase AC signal applied between at least two of the three phase terminals and a fourth DC signal at the first and second DC terminals (P, N), wherein in the second mode of operation the controller is configured to operate the first active switches ($S_{aza}$, $S_{bzb}$, $S_{czc}$) and the third active switches ($S_{Pz}$, $S_{zN}$), such that a third current path through the third intermediate node (z) is obtained:

   acting parallel to a first current path through the first intermediate node (x) and a sum of currents through the first and third current paths returns through the second intermediate node, or acting parallel to a second current path through the second intermediate node (y) and a sum of currents through the second and third current paths returns through the first intermediate node, or acting in alternation parallel to the first and second current paths.

2. Electrical converter of claim 1, wherein in the first mode of operation the at least one second active switch ($S_{xm}$, $S_{my}$, $S_{xy}$) is operated through pulse width modulation such that the second converter stage operates as a boost converter and the first active switches ($S_{aza}$, $S_{bzb}$, $S_{czc}$) are operated according to a switching pattern in which the phase terminal having a smallest absolute instantaneous voltage value of the three phase voltages is continuously connected to the third intermediate node (z).

3. Electrical converter of claim 1 or 2, wherein in the second mode of operation, the at least one second active switch ($S_{xm}$, $S_{my}$, $S_{xy}$) is operated through pulse width modulation such that the electrical converter operates as a single phase boost converter.

4. Electrical converter of claim 1 or 2, wherein in the second mode of operation the controller (40) is configured to operate the at least one second active switch ($S_{xm}$, $S_{my}$, $S_{xy}$) and the third active switches ($S_{Pz}$, $S_{zN}$) via pulse width modulation.

5. Electrical converter of claim 4, wherein in the second mode of operation, the controller (40) is configured to operate the first active switches ($S_{aza}$, $S_{bzb}$, $S_{czc}$) according to a first selection mode so as to connect the third intermediate node to a phase terminal of the three phase terminals having a highest instantaneous voltage to obtain the third current path through the third intermediate node (z) acting parallel to the first current path through the first intermediate node (x), and/or the controller (40) is configured to operate the first active switches ($S_{aza}$, $S_{bzb}$, $S_{czc}$) according to a second selection mode so as to connect the third intermediate node to a phase terminal of the three phase terminals having a lowest instantaneous voltage to obtain the third current path through the third intermediate node (z) acting parallel to the second current path through the second intermediate node (y).

6. Electrical converter of claim 4 or 5, wherein in the second mode of operation, the controller (40) is configured to operate the at least one second active switch ($S_{xm}$, $S_{my}$, $S_{xy}$) and the third active switches ($S_{Pz}$, $S_{zN}$) in an interleaved mode.

7. Electrical converter of claim 4 or 5, wherein in the second mode of operation, the controller (40) is configured to operate the at least one second active switch ($S_{xm}$, $S_{my}$, $S_{xy}$) and the third active switches ($S_{Pz}$, $S_{zN}$) synchronously.

8. Electrical converter of any one of the preceding claims, wherein the boost circuit is a single boost circuit, and wherein the link does not comprise inductive storage elements between the second intermediate node (y) and the fifth intermediate node (s), or between the first intermediate node (x) and the fourth intermediate node (r).

9. Electrical converter of any one of the claims 1 to 7, wherein the boost circuit comprises a first boost circuit (19) and a second boost circuit (20) stacked between the first DC terminal (P) and the second DC terminal (N), wherein the first and second boost circuits comprise a common node (m), preferably wherein each of the first boost circuit (19) and the second boost circuit (20) comprises one of the at least one second active switch ($S_{xm}$, $S_{my}$) and in the second mode of operation, the controller (40) is configured to operate the at least one second active switches of the first boost circuit and of the second boost circuit synchronously.

10. Electrical converter of claim 9 , wherein either one or both the first boost circuit (19) and the second boost circuit (20) is a multi-level boost circuit.

11. Electrical converter of claim 9 or 10, wherein the common node (m) is connected to a middle voltage node (q) between the first DC terminal (P) and the second DC terminal (N).

12. Electrical converter of any one of the preceding claims, wherein the first converter stage comprises a bridge converter comprising three bridge legs (16, 17, 18).

13. Electrical converter (600) of any one of the preceding claims, comprising a fourth switch (23) between the first intermediate node (x) and the fourth intermediate node (r) and/or between the second intermediate node (y) and the fifth intermediate node (s), wherein the controller (40) is operable to open the fourth switch (23) during startup for pre-charging a voltage between the first and second DC-terminals.

14. A battery charging system comprising a power supply, the power supply comprising the electrical converter of any one of the preceding claims, preferably wherein the battery is configured to drive an electric vehicle.

15. Electric motor drive system, comprising a power supply, the power supply comprising the electrical converter of any one of the claims 1 to 13.

**Patentansprüche**

1. Stromwandler (100, 200, 300, 400, 500, 600) zum Umwandeln zwischen einem Wechselstromsignal, das drei Phasenspannungen aufweist, und einem Gleichstromsignal, umfassend:

   drei Phasenanschlüsse (A, B, C), einen ersten Gleichstromanschluss (P) und einen zweiten Gleichstromanschluss (N),
   eine erste Wandlerstufe (11), die funktionsfähig mit den drei Phasenanschlüssen gekoppelt ist und einen ersten Zwischenknoten (x) und einen zweiten Zwischenknoten (y) umfasst, wobei die erste Wandlerstufe konfiguriert ist, um zwischen dem Wechselstromsignal an den drei Phasenanschlüssen und einem ersten Gleichstromsignal an dem ersten Zwischenknoten (x) und dem zweiten Zwischenknoten (y) umzuwandeln, wobei die erste Wandlerstufe ferner einen Phasenselektor (25), umfassend erste aktive Schalter ($S_{aza}$, $S_{bzb}$, $S_{czc}$), die konfiguriert sind, um die drei Phasenanschlüsse selektiv mit einem dritten Zwischenknoten (z) zu verbinden, umfasst,
   eine zweite Wandlerstufe (12), die funktionsfähig mit dem ersten und dem zweiten Gleichstromanschluss (P, N) gekoppelt ist und umfassend einen vierten Zwischenknoten (r) und einen fünften Zwischenknoten (s), wobei die zweite Wandlerstufe eine Aufwärtsschaltung (19, 20, 29) umfasst, die betreibbar ist, um zwischen einem zweiten Gleichstromsignal an dem vierten und dem fünften Zwischenknoten (r, s) und einem dritten Gleichstromsignal an dem ersten und dem zweiten Gleichstromanschluss (P, N) über mindestens einen zweiten aktiven Schalter ($S_{xm}$, $S_{my}$, $S_{xy}$) umzuwandeln, wobei die zweite Wandlerstufe ferner eine Stromeinspeisschaltung (14), umfassend dritte aktive Schalter ($S_{Pz}$, $S_{zN}$), die betreibbar sind, um den dritten Zwischenknoten (z) mit dem ersten Gleichstromanschluss (P) und mit dem zweiten Gleichstromanschluss (N) zu verbinden, umfasst,
   eine Verbindung, die den ersten Zwischenknoten (x) mit dem vierten Zwischenknoten (r) und den zweiten Zwischenknoten (y) mit dem fünften Zwischenknoten (s) verbindet, und
   eine Steuerung (40), die mit einer zur Umwandlung zwischen dem Wechselstromsignal und dem dritten Gleichstromsignal konfigurierte ersten Betriebsart implementiert ist,
   **dadurch gekennzeichnet, dass** die Steuerung (40) mit einer zweiten Betriebsart, die konfiguriert ist zur Umwandlung zwischen einem einphasigen Wechselstromsignal, das zwischen mindestens zwei der drei Phasenanschlüsse angelegt wird, und einem vierten Gleichstromsignal an dem ersten und dem zweiten Gleichstromanschluss (P, N), implementiert ist, wobei in der zweiten Betriebsart die Steuerung konfiguriert ist, um die ersten aktiven Schalter ($S_{aza}$, $S_{bzb}$, $S_{czc}$) und die dritten aktiven Schalter ($S_{Pz}$, $S_{zN}$) zu betätigen, so dass ein dritter Strompfad durch den dritten Zwischenknoten (z):

parallel zu einem ersten Strompfad durch den ersten Zwischenknoten (x) und eine Summe der Ströme durch den ersten und den dritten Strompfad kehrt durch den zweiten Zwischenknoten zurück, oder parallel zu einem zweiten Strompfad durch den zweiten Zwischenknoten (y) und eine Summe der Ströme durch den zweiten und den dritten Strompfad kehrt durch den ersten Zwischenknoten zurück, oder abwechselnd parallel zu dem ersten und dem zweiten Strompfad, erlangt wird.

2. Stromwandler nach Anspruch 1, wobei der mindestens eine zweite aktive Schalter ($S_{xm}$, $S_{my}$, $S_{xy}$) in der ersten Betriebsart durch Pulsweitenmodulation betrieben wird, sodass die zweite Wandlerstufe als Aufwärtswandler betrieben wird und die ersten aktiven Schalter ($S_{aza}$, $S_{bzb}$, $S_{czc}$) gemäß einem Schaltmuster, bei dem der Phasenanschluss mit dem kleinsten absoluten momentanen Spannungswert der drei Phasenspannungen kontinuierlich mit dem dritten Zwischenknoten (z) verbunden ist, betrieben werden.

3. Stromwandler nach Anspruch 1 oder 2, wobei in der zweiten Betriebsart der mindestens eine zweite aktive Schalter ($S_{xm}$, $S_{my}$, $S_{xy}$) durch Pulsweitenmodulation betrieben wird, sodass der elektrische Wandler als einphasiger Aufwärtswandler betrieben wird.

4. Stromwandler nach Anspruch 1 oder 2, wobei in der zweiten Betriebsart die Steuerung (40) konfiguriert ist, um den mindestens einen zweiten aktiven Schalter ($S_{xm}$, $S_{my}$, $S_{xy}$) und die dritten aktiven Schalter ($S_{Pz}$, $S_{zN}$) über Pulsweitenmodulation zu betreiben.

5. Stromwandler nach Anspruch 4, wobei in der zweiten Betriebsart, die Steuerung (40) konfiguriert ist, um die ersten aktiven Schalter ($S_{aza}$, $S_{bzb}$, $S_{czc}$) gemäß einem ersten Auswahlmodus zu betreiben, um den dritten Zwischenknoten mit einem Phasenanschluss der drei Phasenanschlüsse, die eine höchste momentane Spannung aufweist, zu verbinden um den dritten Strompfad durch den dritten Zwischenknoten (z), der parallel zu dem ersten Strompfad durch den ersten Zwischenknoten (x) wirkt, zu erlangen, und/oder die Steuerung (40) konfiguriert ist, um die ersten aktiven Schalter ($S_{aza}$, $S_{bzb}$, $S_{czc}$) gemäß einem zweiten Auswahlmodus zu betreiben, um den dritten Zwischenknoten mit einem Phasenanschluss der drei Phasenanschlüsse, der eine niedrigste momentane Spannung aufweist, zu verbinden um den dritten Strompfad durch den dritten Zwischenknoten (z), der parallel zu dem zweiten Strompfad durch den zweiten Zwischenknoten (y) wirkt, zu erlangen.

6. Stromwandler nach Anspruch 4 oder 5, wobei in der zweiten Betriebsart die Steuerung (40) konfiguriert ist, um den mindestens einen zweiten aktiven Schalter ($S_{xm}$, $S_{my}$, $S_{xy}$) und die dritten aktiven Schalter ($S_{Pz}$, $S_{zN}$) in einem verschachtelten Modus zu betreiben.

7. Stromwandler nach Anspruch 4 oder 5, wobei in der zweiten Betriebsart die Steuerung (40) konfiguriert ist, um den mindestens einen zweiten aktiven Schalter ($S_{xm}$, $S_{my}$, $S_{xy}$) und die dritten aktiven Schalter ($S_{Pz}$, $S_{zN}$) synchron zu betreiben.

8. Stromwandler nach irgendeinem der vorherigen Ansprüche, wobei die Aufwärtsschaltung eine einzelne Aufwärtsschaltung ist und wobei die Verbindung keine induktiven Speicherelemente zwischen dem zweiten Zwischenknoten (y) und dem fünften Zwischenknoten (s) oder zwischen dem ersten Zwischenknoten (x) und dem vierten Zwischenknoten (r) umfasst.

9. Stromwandler nach irgendeinem der Ansprüche 1 bis 7, wobei die Aufwärtsschaltung eine erste Aufwärtsschaltung (19) und eine zweite Aufwärtsschaltung (20), die zwischen dem ersten Gleichspannungsanschluss (P) und dem zweiten Gleichspannungsanschluss (N) verbunden sind, umfasst, wobei die erste und die zweite Aufwärtsschaltung einen gemeinsamen Knoten (m) umfassen, vorzugsweise wobei jede von der ersten Aufwärtsschaltung (19) und der zweiten Aufwärtsschaltung (20) einen der mindestens einen zweiten aktiven Schalter ($S_{xm}$, $S_{my}$) umfasst, und wobei in der zweiten Betriebsart die Steuerung (40) konfiguriert ist, um die mindestens einen zweiten aktiven Schalter der ersten Aufwärtsschaltung und der zweiten Aufwärtsschaltung synchron zu betreiben.

10. Stromwandler nach Anspruch 9, wobei entweder die erste Aufwärtsschaltung (19) oder die zweite Aufwärtsschaltung (20) oder beide eine mehrstufige Aufwärtsschaltung sind.

**11.** Stromwandler nach Anspruch 9 oder 10, wobei der gemeinsame Knoten (m) mit einem mittleren Spannungsknoten (q) zwischen dem ersten Gleichspannungsanschluss (P) und dem zweiten Gleichspannungsanschluss (N) verbunden ist.

**12.** Stromwandler nach irgendeinem der vorherigen Ansprüche, wobei die erste Wandlerstufe einen drei Brückenzweige (16, 17, 18) umfassenden Brückenwandler umfasst.

**13.** Stromwandler (600) nach irgendeinem der vorherigen Ansprüche, umfassend einen vierten Schalter (23) zwischen dem ersten Zwischenknoten (x) und dem vierten Zwischenknoten (r) und/oder zwischen dem zweiten Zwischenknoten (y) und dem fünften Zwischenknoten (s), wobei die Steuerung (40) betreibbar ist, um den vierten Schalter (23) während des Starts zu öffnen, um eine Spannung zwischen dem ersten und dem zweiten Gleichstromanschluss vorzuladen.

**14.** Ein Batterieladesystem, umfassend eine Stromversorgung, die Stromversorgung umfassend den Stromwandler nach irgendeinem der vorherigen Ansprüche, wobei die Batterie vorzugsweise konfiguriert ist, um ein Elektrofahrzeug anzutreiben.

**15.** Elektromotorantriebssystem, umfassend eine Stromversorgung, die Stromversorgung umfassend den Stromwandler nach irgendeinem der Ansprüche 1 bis 13.

**Revendications**

**1.** Convertisseur électrique (100, 200, 300, 400, 500, 600) pour une conversion entre un signal CA ayant des tensions triphasées et un signal CC, comprenant :

trois bornes de phase (A, B, C), une première borne CC (P) et une deuxième borne CC (N), un premier étage de convertisseur (11) couplé fonctionnellement aux trois bornes de phase et comprenant un premier noeud intermédiaire (x) et un deuxième noeud intermédiaire (y), dans lequel le premier étage de convertisseur est configuré pour effectuer une conversion entre le signal CA au niveau des trois bornes de phase et un premier signal CC au niveau du premier noeud intermédiaire (x) et du deuxième noeud intermédiaire (y), dans lequel le premier étage de convertisseur comprend en outre un sélecteur de phase (25) comprenant des premiers commutateurs actifs ($S_{aza}$, $S_{bzb}$, $S_{czc}$) configurés pour connecter sélectivement les trois bornes de phase à un troisième noeud intermédiaire (z),
un deuxième étage de convertisseur (12) couplé fonctionnellement aux première et deuxième bornes CC (P, N) et comprenant un quatrième noeud intermédiaire (r) et un cinquième noeud intermédiaire (s), dans lequel le deuxième étage de convertisseur comprend un circuit survolteur (19, 20, 29) servant à effectuer une conversion entre un deuxième signal CC au niveau des quatrième et cinquième noeuds intermédiaires (r, s) et un troisième signal CC au niveau des première et deuxième bornes CC (P, N) par le biais d'au moins un deuxième commutateur actif ($S_{xm}$, $S_{my}$, $S_{xy}$), dans lequel le deuxième étage de convertisseur comprend en outre un circuit d'injection de courant (14) comprenant des troisièmes commutateurs actifs ($S_{Pz}$, $S_{zN}$) servant à connecter le troisième noeud intermédiaire (z) à la première borne CC (P) et à la deuxième borne CC (N),
une liaison reliant le premier noeud intermédiaire (x) au quatrième noeud intermédiaire (r) et le deuxième noeud intermédiaire (y) au cinquième noeud intermédiaire (s), et
un dispositif de commande (40) mis en oeuvre avec un premier mode de fonctionnement configuré pour effectuer une conversion entre le signal CA et le troisième signal CC,
**caractérisé en ce que** le dispositif de commande (40) est mis en oeuvre avec un deuxième mode de fonctionnement configuré pour effectuer une conversion entre un signal CA monophasé appliqué entre au moins deux des trois bornes de phase et un quatrième signal CC au niveau des première et deuxième bornes CC (P, N),
dans lequel dans le deuxième mode de fonctionnement, le dispositif de commande est configuré pour actionner les premiers commutateurs actifs ($S_{aza}$, $S_{bzb}$, $S_{czc}$) et les troisièmes commutateurs actifs ($S_{Pz}$, $S_{zN}$), de telle sorte qu'un troisième trajet de courant à travers le troisième noeud intermédiaire (z) est obtenu :

agissant parallèlement à un premier trajet de courant à travers le premier noeud intermédiaire (x) et une somme de courants à travers les premier et troisième trajets de courant retourne à travers le deuxième noeud intermédiaire, ou
agissant parallèlement à un deuxième trajet de courant à travers le deuxième noeud intermédiaire (y) et une somme de courants à travers les deuxième et troisième trajets de courant retourne à travers le premier noeud intermédiaire, ou
agissant en alternance parallèlement aux premier et deuxième trajets de courant.

**2.** Convertisseur électrique selon la revendication 1, dans lequel dans le premier mode de fonctionnement l'au moins un deuxième commutateur actif ($S_{xm}$, $S_{my}$, $S_{xy}$) est actionné par le biais d'une modulation d'impulsions en largeur de telle sorte que le deuxième étage de convertisseur sert de convertisseur survolteur et que les premiers commutateurs actifs ($S_{aza}$, $S_{bzb}$, $S_{czc}$) sont actionnés selon un motif de commutation dans lequel la borne de phase ayant une valeur de tension instantanée absolue la plus basse des trois tensions de phase est connectée en continu au troisième noeud intermédiaire (z).

**3.** Convertisseur électrique selon la revendication 1 ou 2, dans lequel dans le deuxième mode de fonctionnement, l'au moins un deuxième commutateur actif ($S_{xm}$, $S_{my}$, $S_{xy}$) est actionné par le biais d'une modulation d'impulsions en largeur de telle sorte que le convertisseur électrique sert de convertisseur survolteur monophasé.

**4.** Convertisseur électrique selon la revendication 1 ou 2, dans lequel dans le deuxième mode de fonctionnement, le dispositif de commande (40) est configuré pour actionner l'au moins un deuxième commutateur actif ($S_{xm}$, $S_{my}$, $S_{xy}$) et les troisièmes commutateurs actifs ($S_{Pz}$, $S_{zN}$) par le biais d'une modulation d'impulsions en largeur.

**5.** Convertisseur électrique selon la revendication 4, dans lequel dans le deuxième mode de fonctionnement, le dispositif de commande (40) est configuré pour actionner les premiers commutateurs actifs ($S_{aza}$, $S_{bzb}$, $S_{czc}$) selon un premier mode de sélection de sorte à connecter le troisième noeud intermédiaire à une borne de phase des trois bornes de phase ayant une tension instantanée la plus élevée pour obtenir le troisième trajet de courant à travers le troisième noeud intermédiaire (z) agissant parallèlement au premier trajet de courant à travers le premier noeud intermédiaire (x), et/ou le dispositif de commande (40) est configuré pour actionner les premiers commutateurs actifs ($S_{aza}$, $S_{bzb}$, $S_{czc}$) selon un deuxième mode de sélection de sorte à connecter le troisième noeud intermédiaire à une borne de phase des trois bornes de phase ayant une tension instantanée la plus basse pour obtenir le troisième trajet de courant à travers le troisième noeud intermédiaire (z) agissant parallèlement au deuxième trajet de courant à travers le deuxième noeud intermédiaire (y).

**6.** Convertisseur selon la revendication 4 ou 5, dans lequel dans le deuxième mode de fonctionnement, le dispositif de commande (40) est configuré pour actionner l'au moins un deuxième commutateur actif ($S_{xm}$, $S_{my}$, $S_{xy}$) et les troisièmes commutateurs actifs ($S_{Pz}$, $S_{zN}$) dans un mode imbriqué.

**7.** Convertisseur électrique selon la revendication 4 ou 5, dans lequel dans le deuxième mode de fonctionnement, le dispositif de commande (40) est configuré pour actionner l'au moins un deuxième commutateur actif ($S_{xm}$, $S_{my}$, $S_{xy}$) et les troisièmes commutateurs actifs ($S_{Pz}$, $S_{zN}$) de façon synchrone.

**8.** Convertisseur électrique selon l'une quelconque des revendications précédentes, dans lequel le circuit survolteur est un circuit survolteur simple, et dans lequel la liaison ne comprend pas d'éléments de stockage inductifs entre le deuxième noeud intermédiaire (y) et le cinquième noeud intermédiaire (s), ou entre le premier noeud intermédiaire (x) et le quatrième noeud intermédiaire (r).

**9.** Convertisseur électrique selon l'une quelconque des revendications 1 à 7, dans lequel le circuit survolteur comprend un premier circuit survolteur (19) et un deuxième circuit survolteur (20) empilés entre la première borne CC (P) et la deuxième borne CC (N), dans lequel les premier et deuxième circuits survolteurs comprennent un noeud commun (m), de préférence dans lequel chacun du premier circuit survolteur (19) et du deuxième circuit survolteur (20) comprend l'un de l'au moins un deuxième commutateur actif ($S_{xm}$, $S_{my}$) et dans le deuxième mode de fonctionnement, le dispositif de commande (40) est configuré pour actionner les au moins un deuxièmes commutateurs actifs du premier circuit survolteur et du deuxième circuit survolteur de façon synchrone.

**10.** Convertisseur électrique selon la revendication 9, dans lequel soit l'un ou l'autre, soit les deux du premier circuit survolteur (19) et du deuxième circuit survolteur (20) est un circuit survolteur à plusieurs niveaux.

**11.** Convertisseur électrique selon la revendication 9 ou 10, dans lequel le noeud commun (m) est connecté à un noeud de tension moyenne (q) entre la première borne CC (P) et la deuxième borne CC (N).

**12.** Convertisseur électrique selon l'une quelconque des revendications précédentes, dans lequel le premier étage de convertisseur comprend un convertisseur en pont comprenant trois branches de pont (16, 17, 18).

**13.** Convertisseur électrique (600) selon l'une quelconque des revendications précédentes, comprenant un quatrième commutateur (23) entre le premier noeud intermédiaire (x) et le quatrième noeud intermédiaire (r) et/ou entre le deuxième noeud intermédiaire (y) et le cinquième noeud intermédiaire (s), dans lequel le dispositif de commande (40) sert à ouvrir le quatrième commutateur (23) pendant le démarrage pour un pré-chargement d'une tension entre les première et deuxième bornes CC.

14. Système de chargement de batterie comprenant une alimentation électrique, l'alimentation électrique comprenant le convertisseur électrique selon l'une quelconque des revendications précédentes, de préférence dans lequel la batterie est configurée pour entraîner un véhicule électrique.

15. Système d'entraînement de moteur électrique, comprenant une alimentation électrique, l'alimentation électrique comprenant le convertisseur électrique selon l'une quelconque des revendications 1 à 13.

**FIG 1**

**FIG 2A**

**FIG 2B**

**FIG 2C**

FIG 2D

FIG 2E

**FIG 2F**

**FIG 2G**

**FIG 3**

FIG 4A

FIG 4B

**FIG 4C**

**FIG 5**

FIG 6

**FIG 7A**

**FIG 7B**

FIG 8A

FIG 8B

FIG 9

**FIG 10**

EP 4 147 340 B1

**FIG 11**

**FIG 12**

**FIG 13**

**FIG 14**

**FIG 15**

FIG 16

FIG 17

**FIG 18**

**FIG 19**

**FIG 20**

EP 4 147 340 B1

**FIG 21**

**EP 4 147 340 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5784269 A
- US 20190288539 A